# EUROPEAN PATENT APPLICATION

(11) **EP 3 872 785 A1**
(43) Date of publication of application: **01.09.2021**
(21) Application number: 19876884.8
(22) Date of filing: 17.10.2019
(51) Int. Cl.: G08G 1/16, A47C 7/62, B60N 2/90

(54) **VIBRATION GENERATING DEVICE, AND VIBRATION GENERATING METHOD**

(30) Priority: 22.10.2018 JP 2018198147
(71) Applicant: Faurecia Clarion Electronics Co., Ltd., Saitama-shi, Saitama 330-0081 (JP)
(72) Inventor: ISHIKAWA Takao, Saitama-shi, Saitama 330-0081 (JP); NOGUCHI Kazuo, Akishima-shi, Tokyo 196-8611 (JP); FUJITA Daisuke, Akishima-shi, Tokyo 196-8611 (JP)
(74) Representative: Kramer Barske Schmidtchen Patentanwälte PartG mbB
(86) International application number: PCT/JP2019/040935
(87) International publication number: WO 2020/085202

(57) **Abstract**

A vibration generation apparatus (1a) includes a vehicle situation urgency determination (10a) unit configured to determine the level of the urgency related to the vehicle situation on the basis of the alarm information, a time urgency determination unit (10a) configured to determine the level of the urgency related to the time information such that the level becomes higher in accordance with acquisition time of the alarm information, an overall urgency determination unit (10a) configured to determine the highest level among each of urgency items as the level of overall urgency, an alarm signal generator (30, 40) configured to generate an alarm signal on the basis of the level of the overall urgency, and a vibration generator (200) configured to generate the vibration in accordance with a change in a signal level of the alarm signal. The alarm signal generator (30, 40) generates an alarm signal that causes the vibration generator (200) to consume a different amount of power per unit time when generating the vibration.

## Description

### TECHNICAL FIELD

The present invention relates to a vibration generation apparatus and vibration generation method. More specifically, the present invention relates to a vibration generation apparatus and vibration generation method including a vibration generator that generates vibrations to make notifications to users.

### BACKGROUND ART

There have been proposed vehicle alarm apparatuses including vibrators installed in the seating portion of a vehicle seat (e.g., see Patent Literature 1). Such a vehicle alarm apparatus alarms a person (user) seated on a seat using vibrations generated by vibrators. The vibrators are installed between the cushion material and seat cover of the seating portion. The seated person is in contact with the vibrators through the seat surface and thus is allowed to effectively perceive vibrations generated by the vibrators.

### CITATION LIST

### Patent Literature

Patent Literature 1: Japanese Unexamined Patent Application Publication No. 2009-120015

### SUMMARY OF INVENTION

### Technical Problem

However, installing the vibrators between the cushion material and seat cover of the seating portion is more likely to constrain the mounting layout or the like. For this reason, smaller vibrators have been desired. Also, vibrators that are made as small as possible considering the seating comfort or the like have been desired.

Downsizing a vibrator reduces heat resistance, that is, the limit value of the temperature at which the vibrator is able to generate a normal vibration without being influenced by generated heat. Also, the amount of heat generated by the vibrator tends to increase as the vibrator becomes smaller.

A reduction in the heat resistance of the vibrator reduces the highest level of vibrations that can be generated, resulting in difficulty in making sufficient notifications to the seated person (that is, difficulty in causing the seated person to perceive vibrations). Also, if the vibration level is increased in order to make sufficient notifications to the seated person, the vibrator may be broken by heat generated with vibrations.

The present invention has been made in view of the above problems, and an object thereof is to provide a vibration generation apparatus and vibration generation method that are able to make sufficient notifications to users while suppressing increases in the temperature of vibrators caused by generation of vibrations.

### Solution to Problem

In order to solve the above problems, a vibration generation apparatus according to one aspect of the present invention, the vibration generation apparatus where urgency related to a vehicle situation, urgency related to time information, and overall urgency are set as urgency items and multiple levels are set on each of the urgency items. The apparatus includes a vibration generator configured to generate a vibration to make a notification to a user, an alarm information acquisition unit configured to acquire alarm information to be given to the user, from an alarm information output unit, a vehicle situation urgency determination unit configured to determine the level of the urgency related to the vehicle situation on the basis of the alarm information acquired from the alarm information acquisition unit, a time urgency determination unit configured to measure the time during which the alarm information acquisition unit is continuously acquiring the alarm information and to determine the level of the urgency related to the time information such that the level becomes higher as the measured time becomes longer, an overall urgency determination unit configured to determine the highest level among the level of the urgency determined by the vehicle situation urgency determination unit and the level of the urgency determined by the time urgency determination unit as the level of the overall urgency, and an alarm signal generator configured to generate an alarm signal for causing the vibration generator to generate the vibration, on the basis of the level of the urgency determined by the overall urgency determination unit and to output the alarm signal to the vibration generator. In the apparatus, if the level of the urgency determined by the overall urgency determination unit is a relatively low level among the multiple levels, the alarm signal generator generates an alarm signal that causes the vibration generator to consume a greater amount of power per unit time when generating the vibration, if the level of the urgency determined by the overall urgency determination unit is a relatively high level among the multiple levels, the alarm signal generator generates an alarm signal that causes the vibration generator to consume a smaller amount of power per unit time when generating the vibration. The vibration generator generates the vibration in accordance with a change in a signal level of the alarm signal generated by the alarm signal generator.

A vibration generation method according to another aspect of the present invention, the vibration generation method performed by a vibration generation apparatus where urgency related to a vehicle situation, urgency related to time information, and overall urgency are set as urgency items and multiple levels are set on each of the urgency items and that generates a vibration to make a notification to a user. The method includes an alarm information acquisition step of acquiring, by an alarm information acquisition unit, alarm information to be given to the user, from an alarm information output unit, a vehicle situation urgency determination step of determining, by a vehicle situation urgency determination unit, the level of the urgency related to the vehicle situation on the basis of the alarm information acquired in the alarm information acquisition step, a time urgency determination step of measuring the time during which the alarm information acquisition unit is continuously acquiring the alarm information and determining, by a time urgency determination unit, the level of the urgency related to the time information such that the level becomes higher as the measured time becomes longer, an overall urgency determination step of determining, by an overall urgency determination unit, the highest level among the level of the urgency determined in the vehicle situation urgency determination step and the level of the urgency determined in the time urgency determination step as the level of the overall urgency, an alarm signal generation step of generating, by an alarm signal generator, an alarm signal for generating the vibration, on the basis of the level of the urgency determined in the overall urgency determination step, and a vibration generation step of generating, by a vibration generator, the vibration in accordance with a change in a signal level of the alarm signal generated in the alarm signal generation step. In the method, if the level of the urgency determined in the overall urgency determination step is a relatively low level among the multiple levels, the alarm signal generator, in the alarm signal generation step, generates an alarm signal that causes the vibration generator to consume a greater amount of power per unit time when generating the vibration, if the level of the urgency determined in the overall urgency determination step is a relatively high level among the multiple levels, the alarm signal generator, in the alarm signal generation step, generates an alarm signal that causes the vibration generator to consume a smaller amount of power per unit time when generating the vibration.

The alarm information output unit refers to a device already commercialized under the name of an advanced driver assistance system (ADAS), a driver monitor system (DMS), or the like. In the case of the vibration generation apparatus and vibration generation method according to the above aspect, vibrations generated by the vibration generator include auditorily perceptible vibrations, that is, "sounds."

The "multiple levels set for each of the urgency items" according to the above aspect consist of multiple different ranked high-to-low levels, such as "low," "medium," and "high."

The vibration generation apparatus and vibration generation method according to the above aspect not only determine the level of urgency related to the vehicle situation on the basis of the alarm information to be given to the user (e.g., the content of an alarm that has been determined to need to be given to the user) but also determine the level of urgency related to the time information on the basis of the length of the time during which the alarm information is continuously being acquired, determine the highest level among these levels of urgency as the level of the overall urgency, then generate the alarm signal in accordance with the determined level of the overall urgency, and generate the vibration to make a notification to the user, on the basis of the generated alarm signal.

If the level of the overall urgency is a relatively low level among the multiple levels, the alarm signal generator generates an alarm signal that causes the vibration generator to consume a greater amount of power per unit time when generating a vibration. The case in which the level of the overall urgency is a relatively low level among the multiple levels is, for example, a case in which the content of the alarm that the user has been determined to need to be given is relatively light and the time elapsed since the determination that the user needs to be given the alarm is short.

Thus, if the level of the overall urgency is a relatively low level among the multiple levels, the vibration generator generates a vibration on the basis of the generated alarm signal that causes the vibration generator to consume the greater amount of power per unit time, thereby increasing the perceptibility of the vibration to the user. Also, if the time elapsed since the generation of the vibration is short, the temperature of the vibration generator is more likely not to have increased greatly. For this reason, even if the vibration generator generates a vibration on the basis of the alarm signal that causes the vibration generator to consume the greater amount of power per unit time, the temperature of the vibration generator is less likely to increase significantly.

On the other hand, if the level of the overall urgency is a relatively high level among the multiple levels, the alarm signal generator generates an alarm signal that causes the vibration generator to consume a smaller amount of power per unit time when generating a vibration. The case in which the level of the overall urgency is a relatively high level among the multiple levels is, for example, a case in which the content of the alarm that the user has been determined to need to be given is relatively heavy and the time elapsed since the determination that the user needs to be given the alarm is a relatively long.

Thus, if the level of the overall urgency is a relatively high level among the multiple levels, the vibration generator generates a vibration on the basis of the alarm signal that causes it to consume the smaller amount of power per unit time. As a result, the vibration generation apparatus and vibration generation method are able to continuously make notifications to the user using vibrations while effectively suppressing increases in the temperature of the vibration generator caused by the continuous vibration generation and thus to avoid a situation in which the vibration generator malfunctions.

A smaller vibration generator tends to easily increase in temperature as it generates vibrations. The vibration generation apparatus and vibration generation method according to the above aspect are able to cause the vibration generator to generate the vibration on the basis of the alarm signal that causes the vibration generator to consume the smaller amount of power per unit time and thus to effectively suppress increases in the temperature of the vibration generator, facilitating downsizing of the vibration generator.

The vibration generation apparatus according to the above aspect may include a first temperature detector configured to detect a temperature of the vibration generator. In the apparatus, if the temperature detected by the first temperature detector exceeds a temperature at which the vibration generator may malfunction, the overall urgency determination unit may determine the highest level among the multiple levels as the level of the overall urgency regardless of the level of the urgency determined by the vehicle situation urgency determination unit and the level of the urgency determined by the time urgency determination unit.

The vibration generation method according to the above aspect may include a first temperature detection step of detecting, by a first temperature detector, a temperature of the vibration generator. In the method, if the temperature detected in the first temperature detection step exceeds a temperature at which the vibration generator may malfunction, the overall urgency determination unit, in the overall urgency determination step, may determine the highest level among the multiple levels as the level of the overall urgency regardless of the level of the urgency determined in the vehicle situation urgency determination step and the level of the urgency determined in the time urgency determination step.

If the temperature of the vibration generator detected by the first temperature detector exceeds the temperature at which the vibration generator may malfunction, the vibration generation apparatus and vibration generation method according to the above aspect determine the highest level among the multiple levels of urgency as the level of the overall urgency. If the level of the overall urgency is the highest level, the alarm signal generator generates an alarm signal that causes the vibration generator to consume the smaller amount of power per unit time when generating a vibration. Since the vibration generator generates a vibration on the basis of the alarm signal that causes it to consume the smaller amount of power per unit time, the vibration generation apparatus and vibration generation method according to the above aspect are able to effectively suppress increases in the temperature of the vibration generator caused by the generation of vibrations and to avoid a situation in which the vibration generator malfunctions.

In particular, the first temperature detector detects the temperature of the vibration generator and thus allows for quick and detailed detection as to whether the detected temperature exceeds the temperature at which the vibration generator may malfunction.

The vibration generation apparatus according to the above aspect may include a signal amplifier configured to amplify the alarm signal generated by the alarm signal generator and to output the amplified alarm signal to the vibration generator, and a second temperature detector configured to detect a temperature of the signal amplifier. In the apparatus, if it is determined that the vibration generator may malfunction, on the basis of the temperature detected by the second temperature detector, the overall urgency determination unit may determine the highest level among the multiple levels as the level of the overall urgency regardless of the level of the urgency determined by the vehicle situation urgency determination unit and the level of the urgency determined by the time urgency determination unit.

The vibration generation method according to the above aspect may include a signal amplification step of amplifying, by a signal amplifier, the alarm signal generated in the alarm signal generation step and outputting the amplified alarm signal to the vibration generator, and a second temperature detection step of detecting, by a second temperature detector, a temperature of the signal amplifier. In the method, if it is determined that the vibration generator may malfunction, on the basis of the temperature detected in the second temperature detection step, the overall urgency determination unit, in the overall urgency determination step, may determine the highest level among the multiple levels as the level of the overall urgency regardless of the level of the urgency determined in the vehicle situation urgency determination step and the level of the urgency determined in the time urgency determination step.

To cause a user to perceive a vibration, it is necessary to install a vibration generator in a portion of a vehicle seat or the like in contact with the user. Accordingly, a temperature detector for detecting the temperature of the vibration generator has to be installed near the position of the installed vibration generator. It is also necessary to install wiring or the like for transmitting detected temperature information to an overall urgency determination unit. On the other hand, a signal amplifier is often disposed in a position so as to correspond to an alarm signal generator and does not have to be disposed in the vehicle seat or the like.

The vibration generation apparatus and vibration generation method according to the above aspect detect the temperature of the signal amplifier for amplifying an alarm signal, using the second temperature detector and output the temperature to the overall urgency determination unit. Thus, the vibration generation apparatus and vibration generation method allow for simplifying wiring or the like for transmitting detected temperature information to the overall urgency determination unit and reducing the number of second temperature detectors to be disposed. Also, there is no need to install the second temperature detector near the vibration generator, resulting in a reduction in the installation burden.

In the vibration generation apparatus and vibration generation method according to the above aspect, the alarm signal that causes the vibration generator to consume the greater amount of power per unit time when generating the vibration may have a greater maximum amplitude than the alarm signal that causes the vibration generator to consume the smaller amount of power per unit time.

In the vibration generation apparatus and vibration generation method according to the above aspect, the alarm signal that causes the vibration generator to consume the greater amount of power per unit time when generating the vibration may have a lower frequency range than the alarm signal that causes the vibration generator to consume the smaller amount of power per unit time.

In the vibration generation apparatus and vibration generation method according to the above aspect, a vibration generation time per unit time of the vibration generated by the vibration generator on the basis of the alarm signal that causes the vibration generator to consume the greater amount of power per unit time may be longer than a vibration generation time per unit time of the vibration generated by the vibration generator on the basis of the alarm signal that causes the vibration generator to consume the smaller amount of power per unit time.

In the vibration generation apparatus according to the above aspect, if the level of the urgency determined by the overall urgency determination unit is a relatively low level among the multiple levels, the alarm signal generator may generate a voltage signal whose voltage value has been changed so that the vibration generator consumes a greater amount of power per unit time when generating the vibration, and may output the voltage signal to the vibration generator, if the level of the urgency determined by the overall urgency determination unit is a relatively high level among the multiple levels, the alarm signal generator may generate a voltage signal whose voltage value has been changed so that the vibration generator consumes a smaller amount of power per unit time when generating the vibration, and may output the voltage signal to the vibration generator, and the vibration generator may generate the vibration by driving a motor in accordance with the change in the voltage of the voltage signal acquired from the alarm signal generator.

In the vibration generation method according to the above aspect, if the level of the urgency determined in the overall urgency determination step is a relatively low level among the multiple levels, the alarm signal generator, in the alarm signal generation step, may generate a voltage signal whose voltage value has been changed so that the vibration generator consumes a greater amount of power per unit time when generating the vibration in the vibration generation step, and may output the voltage signal to the vibration generator, if the level of the urgency determined in the overall urgency determination step is a relatively high level among the multiple levels, the alarm signal generator, in the alarm signal generation step, may generate a voltage signal whose voltage value has been changed so that the vibration generator consumes a smaller amount of power per unit time when generating the vibration in the vibration generation step, and may output the voltage signal to the vibration generator, and in the vibration generation step, the vibration generator may generate the vibration by driving a motor in accordance with the change in the voltage of the voltage signal acquired from the alarm signal generator.

The vibration generator may have any configuration. For example, a configuration that generates a force by passing a current through a magnetic field and converts an electric signal (alarm signal) into a physical vibration, such as an exciter, may be used. Also, by viewing an alarm signal as changes in the voltage value (voltage signal) rather than an electric current, a configuration that generates a vibration by driving a motor in accordance with changes in the voltage of a voltage signal, such as an eccentric motor, exciter, piezoelectric element, or linear actuator, may be used.

The vibration generation apparatus and vibration generation method according to the above aspect employ, as the vibration generator, a configuration that generates a vibration by driving a motor in accordance with changes in the voltage of a voltage signal and changes the voltage value of the voltage signal in accordance with the level of the overall urgency. Thus, if the level of the overall urgency is relatively low, the vibration generation apparatus and vibration generation method are able to cause the vibration generator to consume a greater amount of power per unit time when generating a vibration and thus to cause the vibration generator to output a larger vibration, thereby increasing the perceptibility of the vibration to the user.

If the level of the overall urgency is relatively low, the temperature of the vibration generator is more likely not to have increased greatly. For this reason, even if the vibration generator consumes a greater amount of power per unit time due to generation of vibrations, the temperature thereof is less likely to increase significantly.

On the other hand, if the level of the overall urgency is relatively high, the vibration generation apparatus and vibration generation method according to the above aspect are able to change the voltage value and thus to cause the vibration generator to consume a smaller amount of per unit time when generating a vibration. Thus, the vibration generation apparatus and vibration generation method are able to continuously make notifications to the user using vibrations while effectively suppressing increases in the temperature of the vibration generator caused by the continuous vibration generation and thus to avoid a situation in which the vibration generator malfunctions.

### Advantageous Effects of the Invention

If the level of the overall urgency is relatively low level, the vibration generation apparatus and vibration generation method according to the embodiment of the present invention cause the vibration generator to generate the vibration on the basis of the alarm signal that causes the vibration generator to consume the greater amount of power per unit time and thus to cause the vibration generator to output a larger vibration, thereby increasing the perceptibility of the vibration to the user. Further, if the time elapsed since the generation of the vibration is short, the temperature of the vibration generator is more likely not to have increased greatly. For this reason, even if the vibration generator generates the vibration on the basis of the alarm signal that causes it to consume the greater amount of power per unit time, the temperature of the vibration generator is less likely to increase significantly.

If the level of the overall urgency is a relatively high level, the vibration generator generates a vibration on the basis of the alarm signal that causes it to consume the smaller amount of power per unit time. As a result, the vibration generation apparatus and vibration generation method are able to continuously make notifications to the user using vibrations while effectively suppressing increases in the temperature of the vibration generator caused by the continuous vibration generation and thus to avoid a situation in which the vibration generator malfunctions.

Further, the vibration generation apparatus and vibration generation method according to the embodiment is able to cause the vibration generator to generate the vibration on the basis of the alarm signal that causes the vibration generator to consume the smaller amount of power per unit time and thus to effectively suppress increases in the temperature of the vibration generator, facilitating downsizing of the vibration generator.

### BRIEF DESCRIPTION OF DRAWINGS

Fig. 1 is a block diagram showing a schematic configuration of a vibration generation apparatus according to a first embodiment;
Fig. 2 is a perspective view showing a seat having exciters according to the first embodiment installed therein;
Fig. 3(a) is a diagram showing an example of an urgency determination table referenced by a controller according to the first embodiment to determine the level of urgency, Fig. 3(b) is a diagram showing table information showing the relationship between level-of-urgency information and a vibration source selected by a signal selector on the basis of the level of urgency, and Fig. 3(c) is a graph showing an example of the relationship between the timer time and the temperature of a vibrator;
Figs. 4(a), 4(b), and 4(c) are graphs showing the waveforms of vibration sources 1, 2, and 3, respectively, where the vertical axis represents the amplitude and the horizontal axis represents the time;
Fig. 5(a) is a graph showing the waveform of the vibration source 1 different from that shown in Fig. 4(a), Fig. 5(b) is a graph showing the waveform of the vibration source 2 different from that shown in Fig. 4(b), and Fig. 5(c) is a graph showing the waveform of the vibration source 3 different from that shown in Fig. 4(c);
Fig. 6(a) is a graph showing the waveforms of the vibration sources 1 to 3 different from those shown in Figs. 4(a), 4(b), and 4(c) and Figs. 5(a), 5(b), and 5(c), and Fig. 6(b) is a graph showing the waveforms of the vibration sources 1 to 3 obtained by continuously changing the frequency of the waveforms shown in Fig. 6(a);
Fig. 7 is a flowchart showing a level-of-urgency determination process performed by the controller according to the first embodiment;
Fig. 8 is a block diagram showing a schematic configuration of a vibration generation apparatus according to a second embodiment;
Fig. 9(a) is a graph showing an example of an urgency determination table referenced by a controller according to the second embodiment to determine the level of urgency, and Fig. 9(b) is a graph showing an example of the relationship between the time during which vibrations are continuously generated (reproduction time) and the temperature of vibrators;
Fig. 10 is a flowchart showing a level-of-urgency determination process performed by the controller according to the second embodiment.
Fig. 11 is a block diagram showing a schematic configuration of a vibration generation apparatus according to a third embodiment;
Fig. 12 is a block diagram showing a schematic configuration of a vibration generation apparatus according to a fourth embodiment;
Figs. 13(a), 13(b), and 13(c) are graphs showing the waveforms of vibration sources 1, 2, and 3, respectively, where the vertical axis represents the voltage value and the horizontal axis represents the time; and
Fig. 14(a) is a block diagram showing a schematic configuration of another vibration generation apparatus, and Fig. 14(b) is a block diagram showing a schematic configuration of yet another vibration generation apparatus.

### DESCRIPTION OF EMBODIMENTS

Now, examples of a vibration generation apparatus according to the present invention will be described in detail with reference to the drawings.

### [First Embodiment]

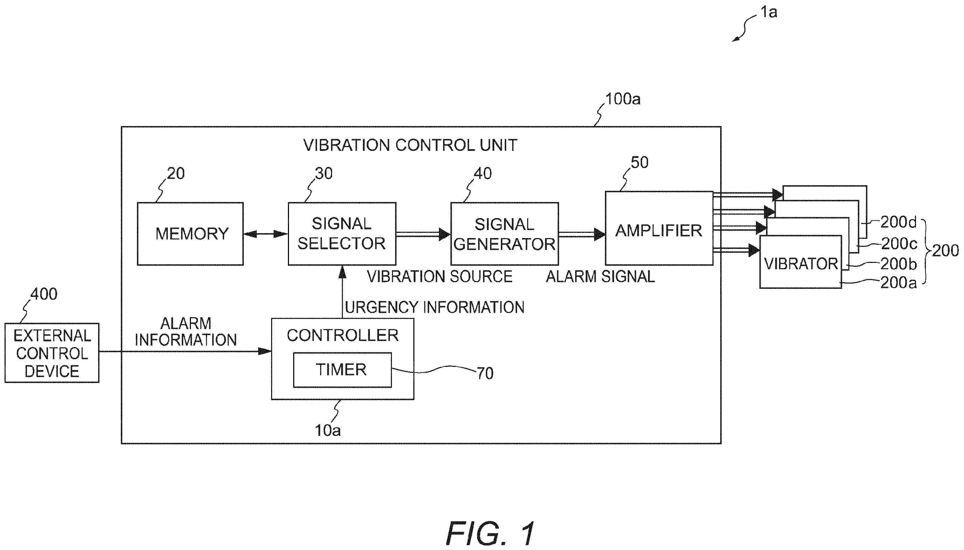

Fig. 1 is a block diagram showing a schematic configuration of a vibration generation apparatus according to a first embodiment. A vibration generation apparatus 1a is installed on a vehicle and makes notifications to the driver (user) by causing the driver to perceive vibrations. As shown in Fig. 1, the vibration generation apparatus 1a includes a vibration control unit 100a and multiple vibrators (vibration generators) 200.

### [Vibrators]

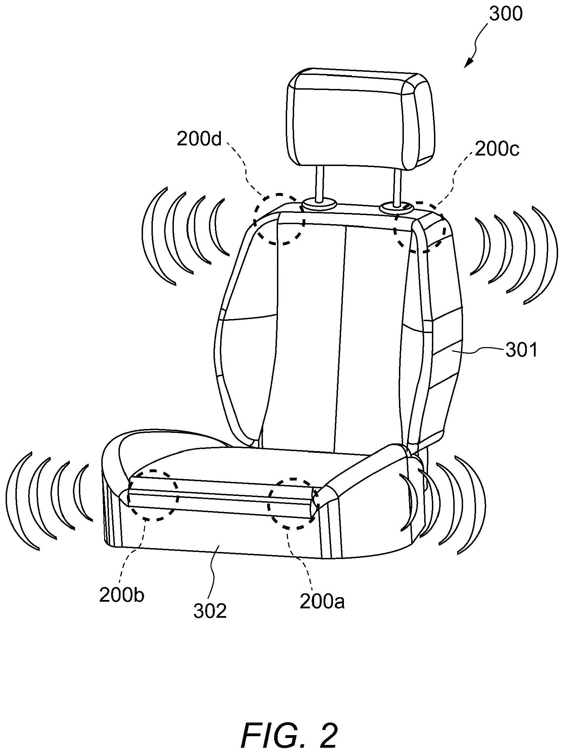

As shown in Fig. 2, the vibrators 200 are installed in a vehicle seat 300 (e.g., the driver's seat). For example, the vibrators 200 according to the first embodiment includes a total of four vibrators installed in upper left and right portions of a backrest 301 of the seat 300 and front left and right portions of a seating portion 302 thereof.

The vibrators 200 may have any configuration as long as they are able to cause the driver seated on the seat 300 to perceive vibrations. For example, the vibrators 200 are eccentric motors, exciters, piezoelectric elements, linear actuators, or the like.

In the first embodiment, a case will be described in which exciters are used as the vibrators 200. The exciters 200 are output units that output a vibration or sound on the basis of an alarm signal received from the vibration control unit 100a. When a typical exciter generates a high-frequency vibration, which is auditorily perceptible, the vibration is perceived as a sound; when it generates a low-frequency vibration, which is auditorily imperceptible, the vibration is perceived as a vibration. For this reason, in the first embodiment, vibrations generated by the exciters basically include auditorily perceptible vibrations, that is, "sounds." As shown in Fig. 2, four exciters 200a, 200b, 200c, and 200d are installed in the seat 300.

### [Vibration Control Unit]

The vibration control unit 100a includes a controller 10a (alarm information acquisition unit, vehicle situation urgency determination unit, time urgency determination unit, overall urgency determination unit), a memory 20, a signal selector (alarm signal generator) 30, a signal generator (alarm signal generator) 40, and an amplifier (signal amplifier) 50. An external control device (alarm information output unit) 400 is connected to the vibration control unit 100a.

### [External Control Device]

The external control device 400 is a device that is already commercialized under the name of an advanced driver assistance system (ADAS), a driver monitor system (DMS), or the like. The external control device 400 detects information of urgency items on the "vehicle situation or the like" (alarm information), such as information on the distance between a nearby vehicle, obstacle, or human and the driver's vehicle (nearby distance information), information on the amount (distance) of departure of the driver's vehicle from the lane (departure distance information), or driver state information on the drowsiness or the like of the driver. These pieces of information on the "vehicle situation or the like" (alarm information) are each information indicating the content of an alarm that has been determined to need to be given to the driver.

Specifically, the external control device 400 detects the distance between an obstacle or the like and the driver's vehicle by emitting a radar wave forward or rearward and measuring the reflected wave. The external control device 400 also detects the amount (distance) of departure of the driver's vehicle from the lane by capturing images of a view ahead of or behind the vehicle and analyzing the images. The external control device 400 also detects the state of the driver, such as drowsiness, on the basis of the facial angle or eyewink frequency (time interval) of the driver or fluctuations in the center position of the steering wheel. The external control device 400 is connected to the controller 10a using, for example, a controller area network (CAN) used for multiplex electrical wiring inside a vehicle.

### [Controller]

The controller 10a consists of a typical central processing unit (CPU). The controller 10a includes a timer 70. The timer 70 measures the time using a typical pulse number counting function of the CPU. The controller 10a measures the time elapsed from a predetermined timing using the timer 70. The controller 10a determines "the level of urgency" of an alarm to be given to the driver on the basis of information on the "vehicle situation or the like" detected by the external control device 400 and the elapsed time measured by the timer 70 and outputs information on the determined level of urgency (urgency information) to the controller 30.

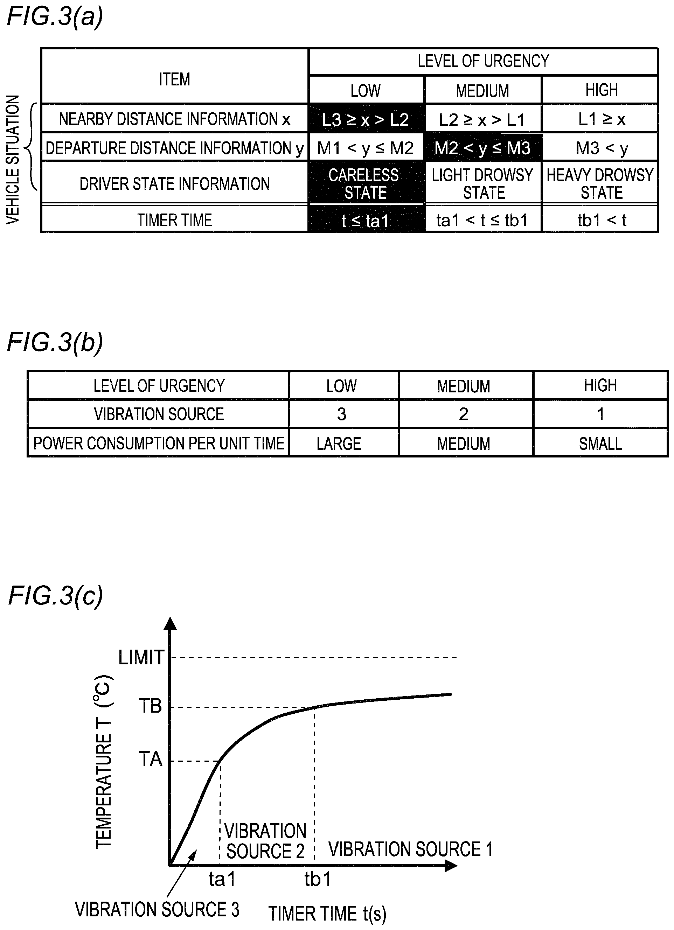

Fig. 3(a) is a diagram showing an example of an urgency determination table referenced by the controller 10a to determine the level of urgency. The controller 10a previously holds the urgency determination table shown in Fig. 3(a) as internal data and determines the level of urgency with reference to the urgency determination table when necessary.

When the controller 10a acquires information on the distance between a nearby vehicle, obstacle, or human and the driver's vehicle (nearby distance information) from the external control device 400, it determines the level of urgency related to nearby distance information on the basis of the acquired distance. "Low," "medium," and "high" shown in Fig. 3(a) represent an example of the levels of urgency. For example, distances L1, L2, and L3 are previously set as distances serving as determination criteria, and it is assumed that L3 > L2 > L1. If the distance x acquired from the external control device 400 is L3 ≥ x > L2, the controller 10a determines the level of urgency related to nearby distance information as "low". Similarly, if the distance x acquired from the external control device 400 is L2 ≥ x >L1, the controller 10a determines the level of urgency related to nearby distance information as "medium"; if the acquired distance x is L1 ≥ x (x is equal to or smaller than L1), it determines the level of urgency related to nearby distance information as "high."

Note that if the distance x between the nearby vehicle, obstacle, or human and the driver's vehicle is x > L3, the external control device 400 according to the first embodiment does not output nearby distance information to the controller 10a. Accordingly, the distance x acquired by the controller 10a from the external control device 400 as nearby distance information is at least equal to or smaller than L3 (L3 ≥ x). Unless the controller 10a acquires nearby distance information from the external control device 400, it does not determine the level of urgency related to nearby distance information.

Also, when the controller 10a acquires information on the amount (distance) of departure of the driver's vehicle from the lane (departure distance information) from the external control device 400, it determines the level of urgency related to departure distance information on the basis of the acquired amount of departure (see Fig. 3(a)). For example, the amounts of departure M1, M2, and M3 are previously set as the amounts (distances) of departure serving as determination criteria, and it is assumed that M1 < M2 < M3. If the amount of departure y acquired from the external control device 400 is M1 < y ≤ M2, the controller 10a determines the level of urgency related to departure distance information as "low." Similarly, if the amount of departure y acquired from the external control device 400 is M2 < y ≤ M3, the controller 10a determines the level of urgency related to departure distance information as "medium"; if the acquired amount of departure y is M3 < y (y is greater than M3), it determines the level of urgency related to departure distance information as "high."

Note that if the amount of departure of the driver's vehicle from the lane is y ≤ M1, the external control device 400 according to the first embodiment does not output departure distance information to the controller 10a. Accordingly, the amount of departure y acquired by the controller 10a from the external control device 400 is at least greater than M1 (y > M1). Unless the controller 10a acquires departure distance information from the external control device 400, it does not determine the level of urgency related to departure distance information.

Also, when the controller 10a acquires information on the driver state, such as the drowsiness of the driver, from the external control device 400, it determines the level of urgency related to driver state information on the basis of the content of the acquired driver state information. For example, three driver states, a "careless" state, a "light drowsy" state, and a "heavy drowsy" state, are previously set as the content of driver state information detected by the external control device 400. If the content of the driver state information acquired from the external control device 400 is a "careless" state, the controller 10a determines the level of urgency related to driver state information as "low." Similarly, if the content of the driver state information acquired from the external control device 400 is a "light drowsy" state, the controller 10a determines the level of urgency related to driver state information as "medium"; if the content of the driver state information is a "heavy drowsy" state, it determines the level of urgency related to driver state information as "high."

Note that if the driver state information is not any of a "careless" state, a "light drowsy" state, and a "heavy drowsy" state, the external control device 400 according to the first embodiment does not output the driver state information to the controller 10a. Accordingly, the driver state information acquired by the controller 10a from the external control device 400 is at least one of a "careless" state, a "light drowsy" state, and a "heavy drowsy" state." Unless the controller 10a acquires driver state information from the external control device 400, it does not determine the level of urgency related to driver state information.

Also, the controller 10a uses the timer 70 to measure the time from the start of acquisition of information on the "vehicle situation or the like" (nearby distance information, departure distance information, or driver state information) from the external control device 400. The controller 10a then determines the level of urgency related to the timer time on the basis of the time measured by the timer 70 (referred to as the timer time). (See Fig. 3(a)). The timer time is denoted as the time t.

For example, times ta1 and tb1 are previously set as the timer times serving as determination criteria, and it is assumed that ta1 < tb1. The times ta1 and tb1 are determined by determining the relationship between the operating time during which the vibrators 200 continuously generate vibrations in an experiment or the like and the increased temperature. Fig. 3(c) shows an example of the relationship between the operating time and increased temperature of the vibrators 200 measured in an experiment or the like. In Fig. 3(c), the vertical axis represents the temperature T of the vibrators 200, and the horizontal axis represents the timer time t.

The relationship between the timer time t and the operating time of the vibrators 200 does not necessarily match the above relationship. However, when the controller 10a acquires information on the "vehicle situation or the like" from the external control device 400, the controller 10a outputs urgency information to the controller 30; the signal selector 30 determines alarm signal data (hereafter referred to as a vibration source) on the basis of the urgency information and outputs it to the signal generator 40; the signal generator 40 generates an alarm signal on the basis of the vibration source; the amplifier 50 amplifies the alarm signal; and the vibrators 200 output (generate) alarm vibrations, as will be described later. The difference (lag) between the time when the controller 10a acquires the information on the "vehicle situation or the like" and the time when the vibrators 200 output (generate) alarm vibrations is very small. Considering the influence of the temperature increase related to the operating time of the vibrators 200, it is not a problem to regard the timer time as the operating time. For this reason, in the first embodiment, the relationship between the timer time and the temperature increase of the vibrators 200 is shown using data obtained in an experiment or the like, as shown in Fig. 3(c).

In Fig. 3(c), the "limit" of the temperature T is the temperature at which the vibrators 200 are broken (or the temperature at which the vibrators 200 are more likely to be broken). Two temperatures that do not exceed the limit are determined as thresholds of the temperature T. Since the levels of urgency consist of the three levels, "low," "medium," and "high," two values, a temperature TA°C serving as the boundary between "low" and "medium" and a temperature TB°C serving as the boundary between "medium" and "high" are determined as the thresholds of the temperature T. The number of thresholds to be set is determined in accordance with the number of levels of urgency.

As shown in Fig. 3(c), as the timer time t increases, the temperature T increases while drawing a gentle curve. The timer times ta1 and tb1 are determined on the basis of graph data obtained through an experiment or the like. In Fig. 3(c), ta1 is set as a timer time corresponding to the temperature TA°C, and tb1 is set as a timer time corresponding to the temperature TB°C. Specifically, through an experiment or the like, 3 sec is obtained as the timer time ta1 when the temperature TA°C of the vibrators 200 is 70°C, and 10 sec is obtained as the timer time ta2 when the temperature TB°C of the vibrators 200 is 120°C.

If the timer time t measured by the timer 70 is equal to or shorter than the time ta1, the controller 10a determines the level of urgency related to the timer time as "low" (see Fig. 3(a)). Similarly, if the timer time t measured by the timer 70 is ta1 < t ≤ tb1, the controller 10a determines the level of urgency related to the timer time as "medium"; if the timer time t is tb1 < t, it determines the level of urgency related to the timer time as "high."

The controller 10a then determines the highest among the obtained multiple levels of urgency (at least one of the level of urgency related to nearby distance information, the level of urgency related to departure distance information, and the level of urgency related to driver state information, and the level of urgency related to the timer time) as the level of overall urgency.

The levels of urgency in reverse highlighting in Fig. 3(a) will be described as an example. In Fig. 3(a), "low" is in reverse highlighting among the levels of urgency related to nearby distance information. This means that the controller 10a has determined the level of urgency related to nearby distance information as "low." Similarly, in Fig. 3(a), "medium" is in reverse highlighting among the levels of urgency related to departure distance information; "low" is in reverse highlighting among the levels of urgency related to driver state information; and "low" is in reverse highlighting among the levels of urgency related to the timer time. The controller 10a extracts the level of urgency related to departure distance information, "medium," as the highest level of urgency from the levels of urgency in reverse highlighting in Fig. 3(a) (from the compared levels of urgency) and determines "medium" as the level of overall urgency.

In the example shown in Fig. 3(a), one of "low," "medium," and "high" is in reverse highlighting in each of the levels of urgency related to nearby distance information, the levels of urgency related to departure distance information, and the levels of urgency related to driver state information. However, as described above, the controller 10a may not acquire nearby distance information, departure distance information, or driver state information from the external control device 400. In this case, the controller 10a does not determine the level of urgency of that urgency item, and the urgency item whose level of urgency has not been determined does not influence the determination of the level of overall urgency. Also, if the level of urgency of any urgency item is not determined, the controller 10a does not determine the level of overall urgency.

The controller 10a outputs the determined level of overall urgency to the controller 30 as urgency information.

### [Signal Selector, Memory]

The signal selector 30 selects a vibration source for an alarm signal from the vibration sources in the memory 20 on the basis of the urgency information acquired from the controller 10a and outputs the selected vibration source to the signal generator 40. A vibration source is data used by the signal generator 40 to generate an alarm signal. Specifically, a vibration source is time-varying waveform signal data obtained by converting temporal variations in the voltage V representing the amplitude value into data. The memory 20 is storing the multiple vibration sources classified by the level of urgency.

When the signal selector 30 acquires the urgency information from the controller 10a, it determines the vibration source with reference to, for example, table information as shown in Fig. 3(b). The table information shown in Fig. 3(b) may be stored in the signal selector 30, or may be stored in the memory 20 previously and read by the signal selector 30 when necessary.

The urgency information outputted from the controller 10a to the signal selector 30 is information on one of "low," "medium," and "high." When the signal selector 30 acquires "low" as urgency information, it reads a vibration source "3" corresponding to the level of urgency, "low," shown in Fig. 3(b) from the memory 20 and outputs the vibration source 3 to the signal generator 40. The vibration source 3 is data such that the vibrators 200 consume the largest amount of power per unit time when generating vibrations on the basis of an alarm signal generated on the basis of this vibration source.

When the signal selector 30 acquires "medium" as urgency information, it reads a vibration source "2" corresponding to the level of urgency, "medium," shown in Fig. 3(b) from the memory 20 and outputs the vibration source 2 to the signal generator 40. The vibration source 2 is data such that the vibrators 200 consume the medium amount of power per unit time when generating vibrations. When the signal selector 30 acquires "high" as urgency information, it reads a vibration source "1" corresponding to the level of urgency, "high," shown in Fig. 3(b) from the memory 20 and outputs the vibration source 1 to the signal generator 40. The vibration source 1 is data such that the vibrators 200 consume the smallest amount of power per unit time when generating vibrations.

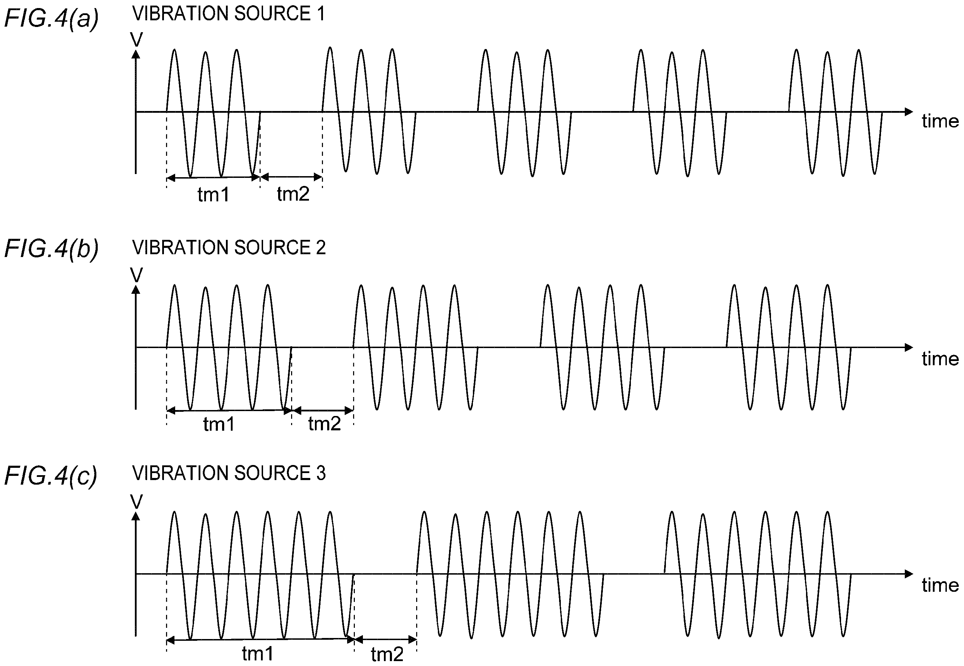

Figs. 4(a) to 4(c) are graphs showing the vibration sources 1 to 3. In Figs. 4(a) to 4(c), the vertical axis represents the amplitude of an alarm signal generated on the basis of each vibration source, and the horizontal axis represents the time. All the maximum amplitudes of the alarm signals shown in Figs. 4(a) to 4(c) are set to the same amplitude. As shown in Figs. 4(a) to 4(c), each vibration source consists of repeated times tm1 during which a vibration is generated (reproduced) and times tm2 during which generation of a vibration is stopped. The vibration generation pattern varies due to the difference in length between the times tm1 and tm2. Typically, when the vibrators 200 generate vibrations, that is, the vibrators 200 are activated, the temperature of the vibrators 200 increase. On the other hand, when the vibrators 200 stop to generate vibrations, that is, the vibrators 200 are not activated, increases in the temperature of the vibrators 200 are suppressed.

A comparison between the vibration source 1 shown in Fig. 4(a) and the vibration source 2 shown in Fig. 4(b) reveals that while the length of the times tm2 during which generation of a vibration is stopped is the same in both the vibration sources 1 and 2, the times tm1 during which a vibration is generated are longer in the vibration source 2 than in the vibration source 1. This means that the vibration source 2 has a longer vibration generation time per unit time and consumes a greater amount of power per unit time than the vibration source 1 and therefore is more likely to increase the temperature of the vibrators 200. Similarly, a comparison between the vibration source 2 shown in Fig. 4(b) and the vibration source 3 shown in Fig. 4(c) reveals that while the length of the times tm2 during which generation of a vibration is stopped is the same in both the vibration sources 2 and 3, the times tm1 during which a vibration is generated are longer in the vibration source 3 than in the vibration source 2. This means that the vibration source 3 has a longer vibration generation time per unit time and consumes a greater amount of power per unit time than the vibration source 2 and therefore the vibrators 200 that generate vibrations on the basis of the vibration source 3 are more likely to increase in temperature. Accordingly, by controlling the vibration generation time per unit time, the power consumption per unit time of the vibrators 200 is controlled, and increases in the temperature of the vibrators 200 are controlled using the differences among the vibration sources.

The configuration in which while the length of the time tm2 during which generation of a vibration is stopped is the same in the vibration sources 1, 2, and 3, the length of the time tm1 during which a vibration is generated varies thereamong has been described above with reference to Figs. 4(a) to 4(c). However, there may be used a configuration in which while the time tm1 during which a vibration is generated is set to the same length in the vibration sources 1, 2, and 3, the time tm2 during which generation of a vibration is stopped varies thereamong. In this configuration also, by controlling the vibration generation time per unit time, the power consumption per unit time of the vibrators 200 is controlled, and increases in the temperature of the vibrators 200 are controlled using the differences among the vibration sources. Also, the ratio of the time tm2 during which generation of a vibration is stopped to the time tm1 during which a vibration is generated may be changed. In this configuration also, by controlling the vibration generation time per unit time, the power consumption per unit time of the vibrators 200 is controlled, and increases in the temperature of the vibrators 200 are controlled using the differences among the vibration sources. Also, there may be used a configuration in which both the time tm1 and time tm2 vary among the vibration sources 1 to 3 rather than the configuration in which one of the times is fixed and the other time varies.

Increases in the temperature of the vibrators 200 due to generation of vibrations tend to vary with the frequency of the vibrations. For example, the power consumption per unit time of the vibrators 200 and increases in the temperature of the vibrators 200 are suppressed when vibrators 200 generate vibrations at a higher frequency compared to when they generate vibrations at a lower frequency.

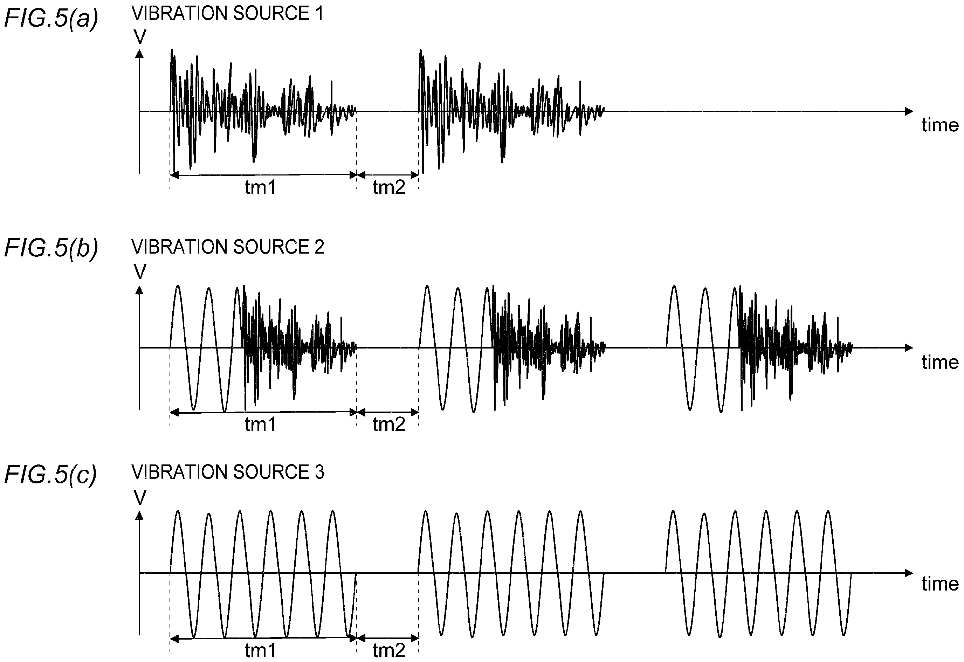

For this reason, as shown in Figs. 5(a) to 5(c), the vibration frequency may be set to a higher frequency in each entire vibration generation time tm1 in the vibration source 1; the vibration frequency may be set to a lower frequency in about half of each vibration generation time tm1 and set to a higher frequency in the remaining time in the vibration source 2; and the vibration frequency may be set to a lower frequency in each entire the vibration generation time tm1 in the vibration source 3. As seen above, the frequency of each vibration source may be changed for each of the vibration generation times. By changing the vibration frequency in each vibration generation time among the different vibration sources, the power consumption per unit time of the vibrators 200 is controlled, and increases in the temperature of the vibrators 200 are controlled using the differences among the vibration sources.

If exciters 200a to 200d are used as the vibrators 200 and the frequency of the vibration source is set to a high frequency, the exciters 200a to 200d may output signals on the basis of the vibration source as auditorily perceptible "sounds" rather than simple vibrations. In this case, by intentionally outputting a speech or the like that alarms the driver (e.g., a speech such as "Be cautious!") rather than a monotone (e.g., a beep sound) from the exciters 200a to 200d, the perceptibility of the alarm to the driver can be increased. To set the frequency of the vibration source in order to output speeches, it is preferred to set the frequency value in a frequency range of 200 Hz to 20 kHz. To set the frequency of the vibration source in order to output vibrations, it is preferred to set the frequency value in a frequency range of 20 Hz to 200 Hz.

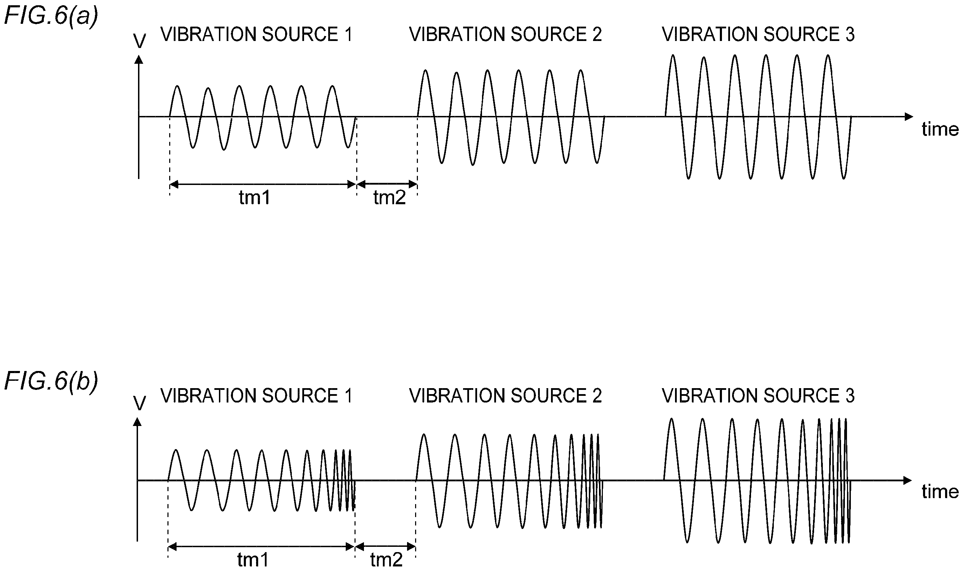

In Figs. 4(a) to 4(c), all the maximum amplitudes of the alarm signals are set to the same amplitude. However, the power consumption per unit time is increased when the maximum amplitude value is allowed to be set to a large value compared to when the maximum amplitude value is limited to a small value. For this reason, as shown in Fig. 6(a), the maximum amplitude value (amplitude width) may be changed among the vibration sources 1, 2, and 3 while the vibration generation time tm1 and vibration stop time tm2 are the same thereamong. In this configuration also, the power consumption per unit time of the vibrators 200 is controlled, and increases in the temperature of the vibrators 200 are controlled using the differences among the vibration sources.

While the cases in which the vibration sources consist of sine waveforms having predetermined frequencies have been described with reference to Figs. 4(a) to 4(c) and 6(a), the waveforms forming the vibration sources are not necessarily limited to the sine waveforms having the predetermined frequencies and may be different waveforms. For example, the waveforms of the vibration sources may be sine waveforms obtained by continuously changing (sweeping) the frequencies (signals having such swept waveforms are referred to as sweep signals). In this case, by setting the maximum amplitude value during sweep to a constant value and always setting the start frequency and end frequency in the vibration generation time tm1 to the same frequency, changes in the power consumption of the vibration sources can be regarded as being similar to those in Figs. 4(a) to 4(c) and 6(a).

Fig. 6(b) shows an example of sine waveforms obtained by continuously changing the frequencies of the vibration sources 1, 2, and 3 shown in Fig. 6(a). By changing the maximum amplitude values of the vibration sources as shown in Fig. 6(a) using, as vibration sources, the sine waveforms obtained by continuously changing the frequencies as shown in Fig. 6(b), the power consumption per unit time of the vibrators 200 is controlled, and increases in the temperature of the vibrators 200 are controlled using the differences among the vibration sources.

Similarly, sine waveforms by continuously changing the frequencies of the vibration sources 1, 2, and 3 shown in Figs. 4(a) to 4(c) may be used. In the vibration sources 1 to 3 shown in Figs. 4(a) to 4(c), the start frequency and end frequency of the vibration generation time tm1 are always set to the same frequency. Thus, by changing the vibration generation time tm1, the power consumption per unit time of the vibrators 200 is controlled, and increases in the temperature of the vibrators 200 are controlled using the differences among the vibration sources.

The memory 20 is storing multiple vibration sources corresponding to the levels of urgency and outputs a vibration source to the signal selector 30 in accordance with reading from the signal selector 30. The signal selector 30 outputs, to the signal generator 40, the vibration source read from the memory 20 on the basis of the urgency information acquired from the controller 10a.

### [Signal Generator, Amplifier]

The signal generator 40 generates an alarm signal on the basis of the vibration source received from the signal selector 30 (alarm signal generation step). Specifically, the signal generator 40 generates an alarm signal corresponding to the vibration source by performing equalizer control or gain control on the waveform signal (e.g., the above-mentioned sine waveform signal), which is the base of the alarm signal, on the basis of the vibration source. The signal generator 40 outputs the generated alarm signal to the amplifier 50. The amplifier 50 amplifies the alarm signal acquired from the signal generator 40 and then outputs the resulting alarm signals to the exciters 200a to 200d (vibrators 200).

The exciters 200a to 200d output alarm vibrations (including alarm sounds) on the basis of the received alarm signals (vibration generation step). Fig. 1 is a block diagram showing a situation in which the alarm signal outputted from the signal generator 40 to the amplifier 50 is divided into four signals by the amplifier 50 and the four signals are outputted to the exciters 200a to 200d. In this block diagram, the single alarm signal outputted from the signal generator 40 is amplified by the amplifier 50, and the resulting signals are outputted to the four exciters 200a to 200d all at once, which then generate alarm vibrations simultaneously.

As described with reference to Fig. 2, the exciters 200a to 200d are installed in the left and right positions of the backrest 301 of the seat 300 and the left and right positions of the seating portion 302 thereof. For this reason, by causing the exciters 200a to 200d installed in the different positions to generate vibrations at different timings, the perceptibility of alarm vibrations (including alarm sounds) to the driver can be increased. Specifically, the exciters may be caused to generate vibrations at different timings as follows: the signal generator 40 outputs four alarm signals corresponding to the exciters 200a to 200d at difference timings, that is, controls the alarm signal output destination among the exciters 200a to 200d, and the amplifier 50 sequentially amplifies the alarm signals and outputs the amplified alarm signals to the corresponding exciters (alarm signal generation step); and thus, the exciters installed in the seat 300 output alarm vibrations (alarm sounds) at different timings (vibration generation step).

### [Overall Urgency Determination Process by Controller]

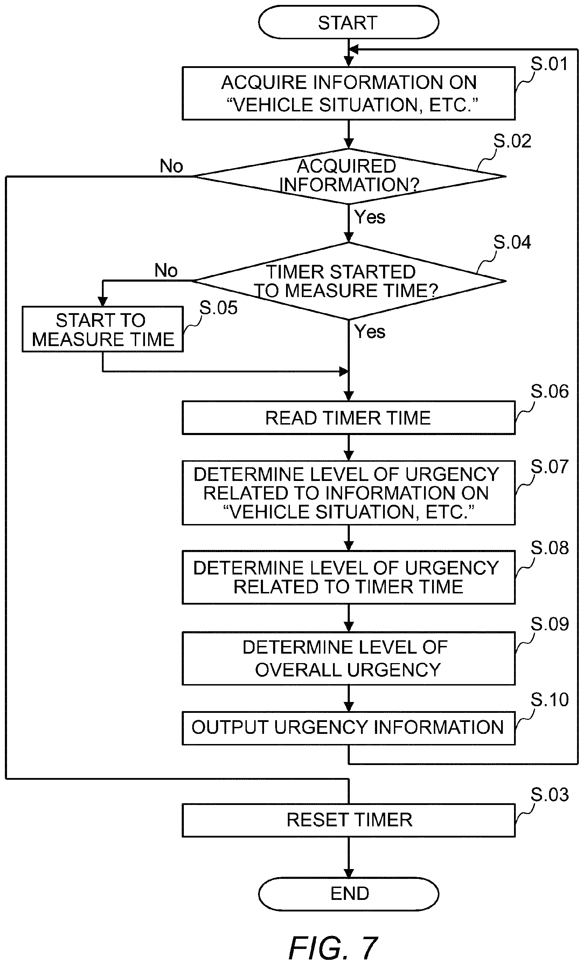

Next, a level-of-overall-urgency determination process performed by the controller 10a will be described. Fig. 7 is a flowchart showing the level-of-urgency determination process performed by the controller 10a. The controller 10a acquires information on the "vehicle situation or the like" outputted from the external control device 400 (S.01: alarm information acquisition step). Specifically, the controller 10a acquires one or more of nearby distance information, departure distance information, and driver state information that can be outputted to the controller 10a by the external control device 400. The controller 10a then determines whether it has been acquired information on the "vehicle situation or the like" from the external control device 400 in S.01 (S.02).

If the controller 10a has not acquired information on the "vehicle situation or the like" from the external control device 400, that is, if the external control device 400 has not outputted any of nearby distance information, departure distance information, and driver state information to the controller 10a (No in S.02), the controller 10a terminates time measurement by the timer 70 by resetting the timer 70 by way of caution, regardless of whether the timer 70 has operated (S.03), ending the level-of-overall-urgency determination process.

Subsequently, the controller 10a repeatedly performs a level-of-overall-urgency determination process every predetermined time. Thus, when the external control device 400 outputs information on the "vehicle situation or the like" to the controller 10a, the controller 10a is able to acquire the information on the "vehicle situation or the like" quickly and continuously without a time lag.

On the other hand, if the controller 10a has acquired information on the "vehicle situation or the like" from the external control device 400, that is, if the controller 10a has acquired one of nearby distance information, departure distance information, and driver state information (Yes in S.02), it determines whether the timer 70 has started to measure the time (S.04). If the timer 70 has not started to measure the time (No in S.04), the controller 10a causes the timer 70 to start to measure the time by activating the timer 70 (S.05).

If the timer 70 has started to measure the time (Yes in S.04) or if the controller 10a causes the timer 70 to start to measure the time (S.05), the controller 10a reads the timer time measured by the timer 70 (S.06). The controller 10a then determines the level of overall urgency on the basis of the information on the "vehicle situation or the like" acquired from the external control device 400 and the timer time measured by the timer 70 (S.07 to S.09).

Specifically, as described with reference to Fig. 3(b), the controller 10a determines the level(s) of urgency on the basis of the nearby distance information, departure distance information, and/or driver state information (information on the "vehicle situation or the like") acquired from the external control device 400 (S.07: vehicle situation urgency determination step). The controller 10a also determines the level of urgency related to the timer time on the basis of the timer time acquired (read) from the timer 70 (S.08: time urgency determination step). The controller 10a then determines the highest level among the obtained multiple levels of urgency (at least one of the level of urgency related to nearby distance information, the level of urgency related to departure distance information, and the level of urgency related to driver state information and the level of urgency related to the timer time) as the level of overall urgency (S.09: overall urgency determination step).

Subsequently, the controller 10a outputs the determined level of overall urgency as urgency information to the signal selector 30 (S.10). The controller 10a then returns to S.01 and repeatedly performs the above process.

As described above, the controller 10a determines the level(s) of urgency related to vehicle situation information on the basis of nearby distance information, departure distance information, and/or driver state information acquired from the external control device 400, also determines the level of urgency related to the timer time, and then determines the level of overall urgency on the basis of the highest level. Thus, the controller 10a determines the state about which the driver should be alarmed from the level of overall urgency in real time.

Also, a vibration source corresponding to the level of overall urgency, "low," "medium," or "high," is selected from among ones that differ in the power consumption per unit time, and the vibrators 200 output vibrations on the basis of the selected vibration source. Thus, increases in the temperature of the vibrators 200 are efficiently suppressed.

Specifically, for example, if the level of overall urgency is "low" and the driver does not perform an operation of improving the situation corresponding to the level of urgency, "low," (e.g., an operation of increasing the inter-vehicle distance with a vehicle ahead or an operation of moving the traveling vehicle to the center of the travel lane) but rather performs an operation of worsening the situation (an operation that may lead to an increase in the alarm, or the like), the level of urgency is changed from "low" to "medium." If the driver does not perform an operation of improving the situation corresponding to the level of urgency, "medium," but rather performs an operation of worsening the situation, the level of urgency is changed from "medium" to "high."

Typically, when the driver recognizes an alarm vibration, the driver is expected to perform an operation of reducing (improving) the level of urgency. For this reason, if an alarm vibration is generated on the basis of the level of urgency, "low," the vibration generation time tends to be short. For this reason, even if the signal selector 30 selects a vibration source that causes the vibrators 200 to consume a greater amount of power per unit time, as a vibration source for generating alarm vibrations based on the level of urgency, "low," determined by the controller 10a, as shown in Fig. 3(b), the time during which the vibrators 200 generate alarm vibrations is more likely to be short and the vibrators 200 are less likely to significantly increase in temperature.

On the other hand, alarm vibrations based on the level of urgency, "medium," show that the driver has not performed an operation of improving (reducing) the level of urgency with alarm vibrations based on the level of urgency, "low," being generated and that the vehicle situation has changed such that the level of urgency is worsen (increased). Alarm vibrations based on the level of urgency, "high," show that the driver has not performed an operation of improving (reducing) the level of urgency with alarm vibrations based on the level of urgency, "low," being generated and that the level of urgency has been changed to "medium" and further to "high" without the driver performing an operation of improving (reducing) the level of urgency.

As seen above, the situation in which alarm vibrations based on the level of urgency, "medium," are being generated represents a state in which alarm vibrations based on the level of urgency, "low," have been continuously generated, then the level of urgency has been changed to "medium," and the vibrators 200 are continuously generating vibrations. Also, the situation in which alarm vibrations based on the level of urgency, "high," are being generated represents a state in which alarm vibrations based on the level of urgency, "low," have been continuously generated; the level of urgency has been changed to "medium" and alarm vibrations have been continuously generated; and finally, the level of urgency has been changed to "high" and the vibrators 200 are continuously generating vibrations. If the vibrators 200 generate vibrations continuously for a long time as described above, the vibrators 200 may increase in temperature and thus malfunction.

For this reason, when generating alarm vibrations based on the level of urgency "medium," the vibrators 200 generate alarm vibrations that cause the vibrators 200 to consume a smaller amount of power per unit time than alarm vibrations based on the level of urgency, "low." Thus, the vibrators 200 are able to continuously generate alarm vibrations while suppressing increases in the temperature of themselves compared to when generating alarm vibrations based on the level of urgency "low." When generating vibrations based on the level of urgency, "high," the vibrators 200 generate alarm vibrations that the vibrators 200 to consume a smaller amount of power than alarm vibrations based on the levels of urgency "low" and "medium." Thus, the vibrators 200 are able to continuously generate alarm vibrations while suppressing increases in the temperature of themselves compared to when generating alarm vibrations based on the levels of urgency "low" and "medium." As seen above, the vibration generation apparatus 1a according to the first embodiment effectively suppresses increases in the temperature of the vibrators 200 while continuously making notifications to the driver using the alarm vibrations and prevents a malfunction of the vibrators 200 while continuously making sufficient notifications to the driver.

Also, when determining the level of overall urgency, the controller 10a determines the level of urgency considering not only the level(s) of urgency related to information on the "vehicle situation or the like" but also the level of urgency related to the timer time. For example, if the level of urgency related to departure distance information is "low" and the driver becomes aware of alarm vibrations based on the level of urgency, "low," being outputted (generated) by the exciters 200a to 200d, the driver typically performs an operation of reducing the level of urgency. However, for example, if the driver does not become aware of the alarm vibrations, or if the driver does not perform an operation of reducing the level of urgency while recognizing the alarm vibrations, or if the driver tries to perform an operation of reducing the level of urgency but cannot perform such an operation, the exciters 200a to 200d would continuously output (generate) alarm vibrations based on the level of urgency, "low."

If the level of urgency is "low" but the situation corresponding to the level of urgency, "low," is not improved and thus the vibrators 200 continuously generate alarm vibrations based on the level of urgency, "low," that cause the vibrators 200 to consume a greater amount of power per unit time, as described above, the exciters 200a to 200d are more likely to increase in temperature and to malfunction. For this reason, the vibration generation apparatus 1a according to the first embodiment measures the time during which information on the "vehicle situation or the like" is being acquired, as the timer time, whether the level of urgency related to the information on the "vehicle situation or the like" is "low," "medium," or "high." The controller 10a then changes the level of overall urgency from "low" to "medium," or from "medium" to "high" as the time during which information on the "vehicle situation or the like" is continuously being acquired becomes longer, that is, the timer time becomes longer. As seen above, the controller 10a does not determine the level of overall urgency on the basis of only the level of urgency related to information on the "vehicle situation or the like" but rather determines the level of overall urgency considering also the timer time. Thus, the vibration generation apparatus 1a is able to suppress increases in the temperature of the exciters 200a to 200d caused by long-time generation of alarm vibrations and thus to prevent a malfunction of the exciters 200a to 200d.

Also, the vibration generation apparatus 1a according to the first embodiment uses the exciters 200a to 200d as the vibrators 200 and thus is able to output (generate) not only alarm vibrations but also alarm sounds (alarm speeches). Since the vibration generation apparatus 1a is able to effectively suppress increases in the temperature of the exciters 200a to 200d by outputting alarm sounds rather than alarm vibration from the exciters 200a to 200d, it is able to reduce malfunctions caused by temperature increases compared to when using eccentric motors, piezoelectric elements, linear actuators, or the like, which are able to output only alarm vibrations, as the vibrators 200.

When alarm vibrations are outputted from the exciters 200a to 200d, it may be only the driver seated on the seat 300 who becomes aware of the alarm vibrations. In this case, by outputting alarm sounds (alarm speeches) from the exciters 200a to 200d, other occupants, who are not seated on the seat 300, are also alarmed by the auditory means, allowing the other occupants to recognize the alarm state (a state having a high level of urgency). Thus, for example, even if the driver does not become aware of the alarm vibrations, or even if the driver does not perform an operation of reducing the level of urgency while perceiving the alarm vibrations, the other occupants are able to urge the driver to perform an operation of reducing the urgency. This allows the driver to improve the vehicle state so that a high urgency situation is avoided and thus to increase safety.

### [Second Embodiment]

Next, a vibration generation apparatus according to a second embodiment will be described. In the case of the vibration generation apparatus 1a according to the first embodiment, the relationship between the operating time during which the vibrators 200 continuously generate vibrations and the increased temperature is previously determined in an experiment or the like (see Fig. 3(c)). Accordingly, the timer times corresponding to increases in the temperature of the vibrators 200 are previously estimated. The vibration generation apparatus 1a is configured to change the level of urgency from "low" to "medium" or from "medium" to "high" in accordance with a lapse of each previously estimated timer time (e.g., the time ta1 or time tb1 in Fig. 3(c)) (see Fig. 3(a)).

In the case of a vibration generation apparatus 1b according to the second embodiment, the relationship between the operating time during which vibrators 200 continuously generate vibrations and the increased temperature is not previously determined in an experiment or the like, unlike the case of the vibration generation apparatus 1a according to the first embodiment. The vibration generation apparatus 1b according to the second embodiment differs from the vibration generation apparatus 1a according to the first embodiment in that it includes temperature detection elements 500 (500a to 500d: first temperature detector) that measure the temperatures of vibrators 200 (200a to 200b) and a vibration control unit 100b includes a temperature detector 60 that detects the temperatures measured by the temperature detection elements 500.

### [Vibration Generation Apparatus]

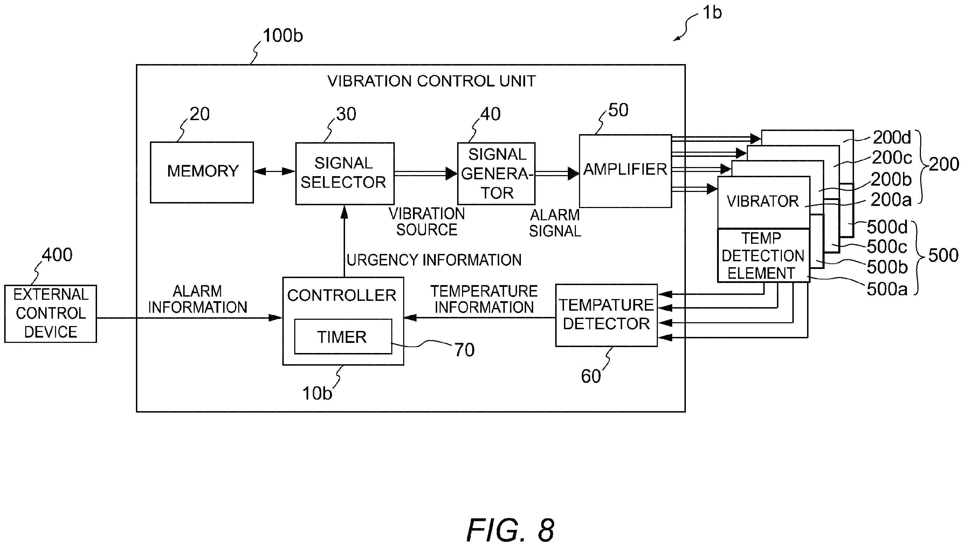

Fig. 8 is a block diagram showing a schematic configuration of the vibration generation apparatus 1b. In Fig. 8, functional blocks of the vibration generation apparatus 1b according to the second embodiment that perform the same processes as those of the vibration generation apparatus 1a according to the first embodiment are given the same reference signs as those in Fig. 1. Those functional blocks will not be described in detail.

### [Temperature Detection Elements]

The temperature detection elements 500 measure the temperatures of the vibrators 200. The temperature detection elements 500 are, for example, thermocouples. By bringing the metal terminal of a thermocouple into contact with an object to be measured, the temperature state of the object is measured on the basis of the voltage value (thermoelectromotive force). If multiple vibrators 200a to 200d are installed in portions of the seat 300 as shown in Fig. 2, the multiple temperature detection elements 500a to 500d are installed near the vibrators 200a to 200d. The temperature detection elements 500 (500a to 500d) output information on the measured voltage values to the temperature detector 60.

### [Temperature Detector]

The temperature detector 60 detects the temperatures of the vibrators 200 on the basis of the voltage value information acquired from the temperature detection elements 500. While the voltage value information is transmitted from the temperature detection elements 500 (500a to 500d) to the temperature detector 60, the voltage values measured by the temperature detection elements 500a to 500d are not necessarily the same value. For example, the portions of the seat 300 in which the vibrators 200a to 200d and temperature detection elements 500a to 500d are installed may include positions in which the temperature is more likely to increase, positions in which the temperature is less likely to increase, or the like. Also, even if the vibrators 200a to 200d generate alarm vibrations for the same time, the temperatures of all the exciters 200a to 200d are not necessarily increased to the same temperature.

The temperature detector 60 detects the temperatures of the exciters 200a to 200d from the voltage value information acquired from the temperature detection elements 500a to 500d, extracts the highest temperature from the detected temperatures, and outputs the highest temperature to a controller 10b. If the vibrator 200 indicating the highest temperature continues generating vibrations, it is more likely to malfunction first among the vibrators 200a to 200d. By extracting the highest temperature from the detected temperatures and outputting it to the controller 10b, increases in the temperature are suppressed using, as a reference, the temperature of the vibrator 200 that is most likely to malfunction among the vibrators 200a to 200d. Thus, the vibration generation apparatus 1b is able to effectively prevent a malfunction of the vibrators 200a to 200d while inspecting all the vibrators. Since the temperature detector 60 continuously outputs information on the temperatures of the vibrators 200 to the controller 10b, the controller 10b is able to determine the temperature states of the vibrators 200 in real time.

### [Controller]

As with the controller 10a according to the first embodiment, the controller 10b determines the level of overall urgency on the basis of information on the "vehicle situation or the like" acquired from an external control device 400 (at least one of nearby distance information, departure distance information, and driver state information) and the timer time. The controller 10b also modifies the determined level of overall urgency on the basis of the information on the temperature of the vibrators 200 acquired from the temperature detector 60.

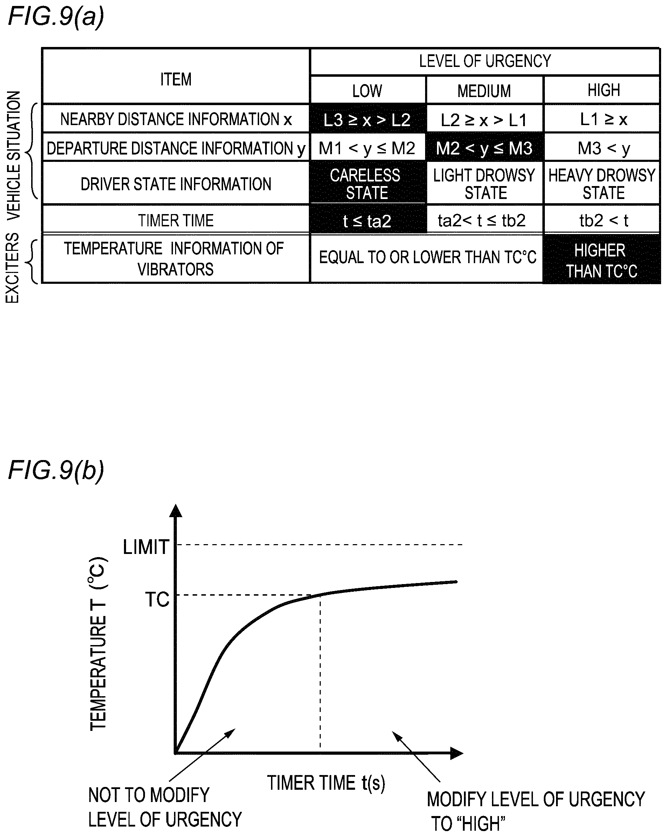

Fig. 9(a) is a diagram showing an example of an urgency determination table referenced by the controller 10b to determine the level of urgency. As with Fig. 3(a), the urgency determination table shown in Fig. 9(a) is used when the controller 10b determines the level of overall urgency on the basis of nearby distance information x, departure distance information y, and/or driver state information, and the timer time.

Note that as described above, the timer times according to the second embodiment, a time ta2 and a time tb2, are not ones obtained by previously determining the relationship between the operating time (corresponding to the timer time) and the increased temperature of the vibrators 200. However, it can be easily imagined that when the vibrators 200 continuously generate alarm vibrations, the vibrators 200 would increase in temperature. For this reason, even if the relationship between the increased temperature and the operating time is not previously determined, the vibration generation apparatus 1b is able to effectively perform suppression of temperature increases and prevention of a malfunction by changing the level of urgency every predetermined time.

The controller 10b modifies the level of overall urgency determined on the basis of nearby distance information x, departure distance information y, and/or driver state information, and the timer time, on the basis of the information on the temperature of the vibrators 200 (see Fig. 9(a)). Fig. 9(b) is a graph showing the relationship between the vibration reproduction time t during which the vibrators 200 continuously generate alarm vibrations and the temperature T of the vibrators 200.

In Fig. 9(b), "limit" refers to a temperature that is the limit of the temperature T°C and at which the vibrators 200 are broken (or at which the vibrators 200 are more likely to be broken). "TC°C" refers to a temperature that is the threshold of the temperature T and that does not exceed the limit but is more likely to cause a malfunction of the vibrators 200 when the temperature of the vibrators 200 increases beyond TC°C. Note that the temperature TC°C may be the same as the temperature TB°C in Fig. 3(c). If the temperature T of the vibrators 200 is equal to or lower than TC°C, the controller 10b does not modify the level of overall urgency determined on the basis of nearby distance information x, departure distance information y, and/or driver state information, and the timer time. On the other hand, if the temperature T of the vibrators 200 is higher than TC°C, the controller 10b modifies, to "high," the level of overall urgency determined on the basis of nearby distance information x, departure distance information y, and/or driver state information, and the timer time, whether the level of overall urgency is "low," "medium," or "high."

As in the first embodiment, when the controller 10b determines the level of overall urgency as "high" and outputs urgency information indicating the level of urgency, "high," to the signal selector 30, the signal selector 30 determines the vibration source 1 that causes the vibrators 200 to consume the smallest amount of power per unit time and the signal generator 40 generates an alarm signal that causes the vibrators 200 to consume the smallest amount of power per unit time. Thus, increases in the temperature of the vibrators 200 caused by generation of alarm signals are suppressed. If the temperature measured by the temperature detection elements 500 is higher than TC°C, the controller 10b determines that the vibrators 200 are more likely to malfunction due to the temperature state thereof. If the temperature of the vibrators 200 is high (higher than TC°C), it is necessary to reduce promptly the power consumption per unit time of the vibrators 200, whether the level of overall urgency determined on the basis of nearby distance information x, departure distance information y, and/or driver state information, and the timer time is "low," "medium," or "high." For this reason, if the temperature T of the vibrators 200 is higher than TC°C, the controller 10b modifies, to "high," the level of overall urgency determined on the basis of nearby distance information x, departure distance information y, and/or driver state information, and the timer time, whether the level of overall urgency is "low," "medium," or "high."

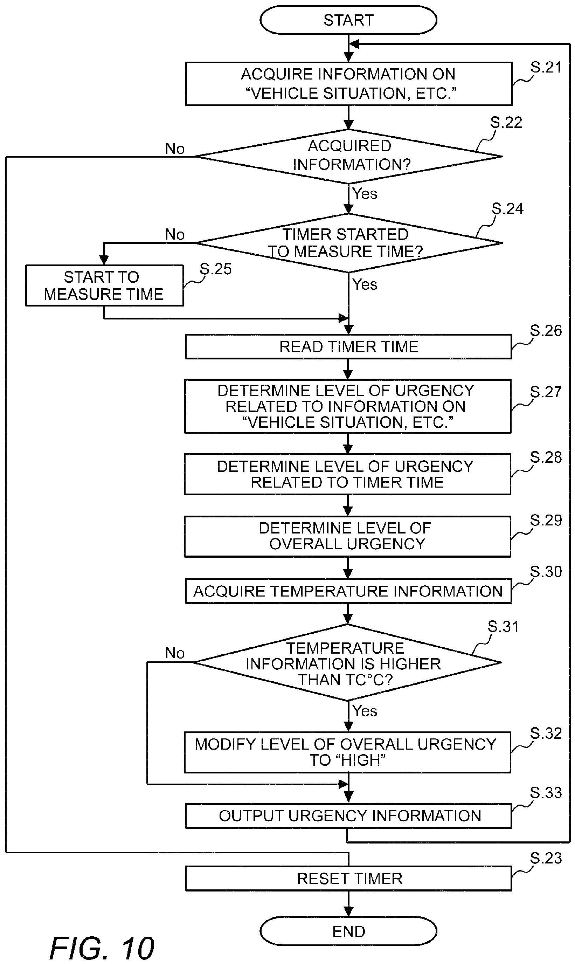

Fig. 10 is a flowchart showing a level-of-urgency determination process performed by the controller 10b. The controller 10b acquires information on the "vehicle situation or the like" outputted from the external control device 400 (S.21). The controller 10b then determines whether it has been able to acquire information on the "vehicle situation or the like" from the external control device 400 in S.21 (S.22). If the controller 10b has not acquired information on the "vehicle situation or the like" from the external control device 400, that is, if the external control device 400 has not outputted any of nearby distance information, departure distance information, and driver state information to the controller 10b (No in S.22), the controller 10b terminates time measurement by the timer 70 by resetting the timer 70 by way of caution, whether the timer 70 has operated (S.23), ending the level-of-overall-urgency determination process.

If the controller 10b has acquired information on the "vehicle situation or the like" from the external control device 400, that is, if the controller 10b has acquired one of nearby distance information, departure distance information, and driver state information (Yes in S.22), it determines whether the timer 70 has started to measure the time (S.24). If the timer 70 has not started to measure the time (No in S.24), the controller 10b activates the timer 70 so that the timer 70 starts to measure the time (S.25).

If the timer 70 has started to measure the time (Yes in S.24) or if the controller 10b causes the timer 70 to start to measure the time (S.25), the controller 10b reads the timer time measured by the timer 70 (S.26). The controller 10b then determines the level(s) of urgency related to information on the "vehicle situation or the like" on the basis of nearby distance information, departure distance information, and/or driver state information acquired from the external control device 400 (S.27). The controller 10b also determines the level of urgency related to the timer time on the basis of the timer time acquired (read) from the timer 70 (S.28). The controller 10b determines, as the level of overall urgency, the highest level among the obtained multiple levels of urgency (at least one of the level of urgency related to nearby distance information, the level of urgency related to departure distance information, and the level of urgency related to driver state information, and the level of urgency related to the timer time) (S.29).

Subsequently, the controller 10b acquires information on the temperature of the vibrators 200 from the temperature detector 60 (S.30) and determines whether the temperature information is higher than TC°C (S.31). If the temperature information is higher than TC°C (Yes in S.31), the controller 10b modifies the level of overall urgency to "high" (S.32). If the temperature information is equal to or lower than TC°C (No in S.31), the controller 10b does not modify the level of overall urgency. Subsequently (after S.32, or if No in S.31), the controller 10b outputs urgency information indicating the level of overall urgency to the signal selector 30 (S.33). The controller 10b then returns to S.21 and repeatedly performs the above process.

As described above, if the temperature T of the vibrators 200 is higher than TC°C, the controller 10b according to the second embodiment modifies, to "high," the level of overall urgency determined on the basis of nearby distance information x, departure distance information y, and/or driver state information, and the timer time, whether the level of overall urgency is "low," "medium," or "high." Thus, the signal selector 30 selects the vibration source 1 that causes the vibrators 200 to consume the smallest amount of power per unit time, and the signal generator 40 generates an alarm signal that causes the vibrators 200 to consume the smallest amount of power per unit time. This allows for quickly and effectively suppressing increases in the temperature of the vibrators 200 caused by output of alarm vibrations based on the alarm signal and preventing a malfunction of the vibrators 200 caused by temperature increases.

While the controller 10b has been described as modifying the level of overall urgency to "high" (S.32) if the temperature information is higher than TC°C (Yes in S.31) and as not modifying the level of overall urgency if the temperature information is equal to or lower than TC°C (No in S.31), the controller 10b need not perform the level-of-overall-urgency determination process as described above as long as it is able to effectively suppress increases in the temperature of the vibrators 200 on the basis of the temperature information acquired from the temperature detector 60. For example, if the temperature information is equal to or lower than TC°C (No in S.31), the controller 10b may additionally reduce the level of overall urgency (e.g., change "high" to "medium").

For example, even if the level of urgency related to information on the "vehicle situation or the like" is determined as "high" or even if the level of urgency related to the timer time is determined as "high," it is not necessary to cause the vibrators 200 to output alarm vibrations on the basis of a vibration source that causes the vibrators 200 to consume a smaller amount of power per unit time as long as the temperature state of the vibrators 200 is lower than the limit, which is the temperature at which the vibrators 200 are broken (or the temperature at which the vibrators 200 are more likely to be broken), as well as lower than the temperature TC°C, at which the vibrators 200 are more likely to malfunction. To alarm the driver using alarm vibrations, it is preferred to cause the vibrators 200 to generate alarm vibrations on the basis of a vibration source that the vibrators 200 to consume a greater amount of power per unit time.

For this reason, if the temperature information is equal to or lower than TC°C (No in S.31), the controller 10b may additionally reduce the level of overall urgency (e.g., change "high" to "medium" or change "medium" to "low"). Thus, the vibrators 200 can generate effective alarm vibrations without malfunctioning.

The thresholds of the temperature information of the vibrators 200, for example, TA°C and TB°C (TA< TB) as shown in Fig. 3(c), may be set. If the temperature information is equal to or lower than TA°C, the controller 10b may modify, to "low," the level of overall urgency determined on the basis of information on the "vehicle situation or the like" and timer information; if the temperature information is higher than TA°C and equal to or lower than TB°C, the controller 10b may modify the level of overall urgency to "medium"; and if the temperature information is higher than TB°C, the controller 10b may modify the level of overall urgency to "high." By modifying the level of overall urgency on the basis of the temperature state of the vibrators 200 as described above, a vibration source that causes the vibrators 200 to consume an amount of power suitable for the temperature state of the vibrators 200 is selected. This allows for causing the vibrators 200 to effectively generate alarm vibrations highly perceptible to the driver while preventing a malfunction of the vibrators 200 caused by temperature increases.

### [Third Embodiment]

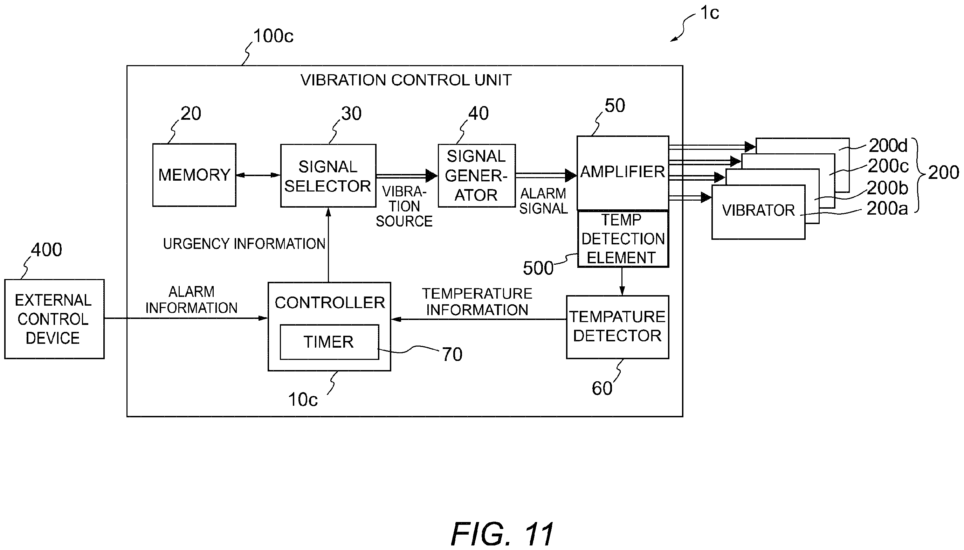

Fig. 11 is a block diagram showing a schematic configuration of a vibration generation apparatus 1c according to a third embodiment. The vibration generation apparatus 1c according to the third embodiment differs from the vibration generation apparatus 1b according to the second embodiment in that a temperature detection element (second temperature detector) 500 measures the temperature of an amplifier 50 rather than the temperature of vibrators 200. When the vibrators 200 generate alarm vibrations on the basis of an alarm signal generated by a signal generator 40, the temperature thereof changes (increases) due to the generation of the alarm vibrations. The changes in the temperature of the vibrators 200 tend to correspond to changes in the temperature of the amplifier 50 for amplifying outputted alarm signals. The temperature detection element 500 measures the temperature of the amplifier 50 and outputs it to the temperature detector 60, which then outputs information on the temperature of the amplifier 50 to a controller 10c.

The controller 10c determines the level of overall urgency on the basis of the urgency determination table (see Fig. 9(a)) described in the second embodiment. When determining the level of overall urgency, the controller 10c modifies the level of overall urgency determined on the basis of information on the "vehicle situation or the like" and timer information, on the basis of the information on the temperature of the amplifier 50. Even if the level of overall urgency is modified on the basis of the information on the temperature of the amplifier 50 rather than information on the temperature of the vibrators 200 as described above, the vibration generation apparatus 1c, as with the vibration generation apparatus 1b according to the second embodiment, is able to effectively suppress increases in the temperature of the vibrators 200 and to prevent a malfunction of the vibrators 200 caused by temperature increases.

Also, the temperature detection element 500 is installed on the amplifier 50 rather than on the vibrators 200 and thus the installation burden of the temperature detection element 500 is reduced. For example, the vibrators 200 (200a to 200d) are installed in four positions of the seat 300 as shown in Fig. 2. For this reason, to measure the temperature of the vibrators 200 using a temperature detection element 500, multiple temperature detection elements 500 must be installed so as to correspond to the positions of the installed vibrators 200a to 200d. Further, wiring or the like must be installed so that the temperature detection elements 500 can output temperature information to the temperature detectors 60.

On the other hand, when measuring the temperature of the amplifier 50 using the temperature detection element 500, it is only necessary to dispose the single temperature detection element 500 with respect to the amplifier 50 disposed in a vibration control unit 100c. This allows for a reduction in the number of temperature detection elements 500 installed and a reduction in the burden of installing wiring from the temperature detection elements 500 to the temperature detector 60.

Note that the threshold of the temperature used when the controller 10c modifies the level of overall urgency on the basis of temperature information of the amplifier 50 differs from the threshold of temperature information of the vibrators 200 used in the second embodiment. This is because while changes in the temperature of the vibrators 200 tend to correspond to changes in the temperature of the amplifier 50 as described above, the absolute temperature values of the vibrators 200 and amplifier 50 may differ from each other. For this reason, it is preferred to previously measure increases in the temperature of the vibrators 200 and increases in the temperature of the amplifier 50 during continuous generation of alarm vibrations by the vibrators 200 in an experiment or the like and associate both temperature increases with each other. By doing so, the temperature at which the level of overall urgency should be modified (e.g., the temperature at which the vibrators 200 becomes TC°C; see Fig. 9(b)) is previously determined using the temperature of the amplifier 50. By modifying the level of overall urgency on the basis of this temperature, the vibration generation apparatus 1c according to the third embodiment is able to more precisely suppress increases in the temperature of the vibrators 200 and thus to prevent a malfunction.

### [Fourth Embodiment]

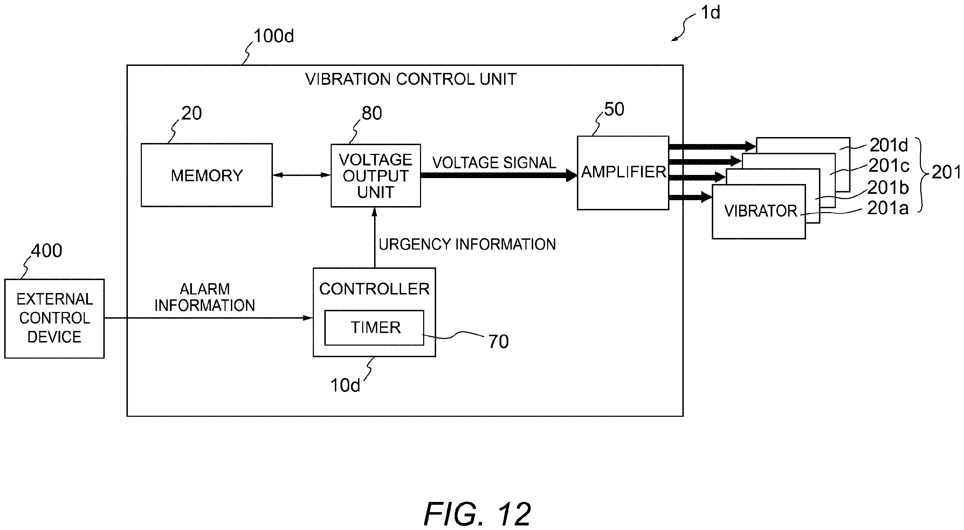

Fig. 12 is a block diagram showing a schematic configuration of a vibration generation apparatus 1d according to a fourth embodiment. The vibration generation apparatus 1d according to the fourth embodiment differs from the vibration generation apparatus 1a according to the first embodiment in that it includes a voltage output unit 80 in place of the signal selector 30 and signal generator 40 included in the vibration generation apparatus 1a. While the vibration generation apparatuses 1a, 1b, and 1c according to the first to third embodiments have been described as including exciters as the vibrators 200, the vibration generation apparatus 1d uses eccentric motors, piezoelectric elements, linear actuator, or the like in place of exciters. An exciter is a device capable of generating sounds or vibrations, mainly low-frequency sounds. As with a typical speaker, an exciter is characterized in that it generates a force by passing a current through a magnetic field and converts an electric signal (alarm signal) into a physical vibration. However, to generate alarm vibrations in the seat 300, the amount of rotation of a motor or the like may be controlled on the basis of changes in the voltage value rather than generating electrical signals (alarm vibrations) and passing the electrical signals through a magnetic field. Examples of vibrators 201 (201a to 201d) that generate vibrations on the basis of changes in the voltage value (changes in the voltage of the voltage signal) include eccentric motors, piezoelectric elements, linear actuators, and the like.

If vibrations of the vibrators 201 are controlled by controlling the voltage value, it is not necessary to generate alarm signals as is done by the signal generator 40. The voltage output unit 80 acquires urgency information from a controller 10d and then acquires a vibration source corresponding to the urgency information from a memory 20 on the basis of the table information shown in Fig. 3(b). The voltage output unit 80 then outputs a voltage signal corresponding to the acquired vibration source to an amplifier 50.

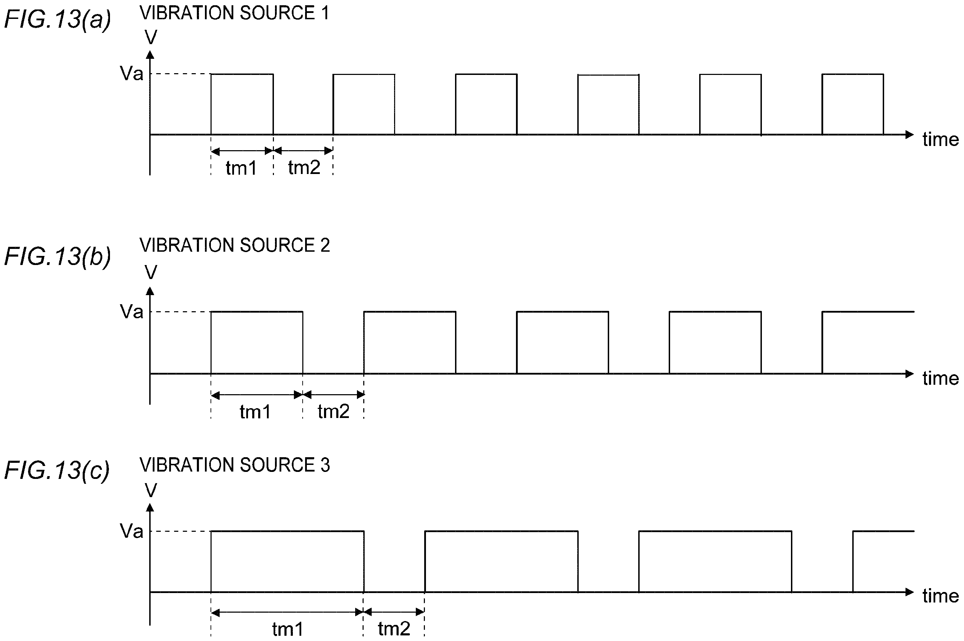

Figs. 13(a), 13(b), and 13(c) are graphs showing vibration sources stored in the memory 20 and, more specifically, are graphs showing changes in the voltage values of voltage signals generated on the basis of the vibration sources. In Figs. 13(a) to 13(c), the vertical axis represents the voltage value outputted on the basis of the vibration source, and the horizontal axis represents the time. Typically, the relationship between power and the amount of heat is the amount of heat (J) = power (W) × time. Power is voltage (V) × current (A), and the current value (A) is obtained from the resistance or the like of an object to which the voltage is applied. The vibrators 201 used in the fourth embodiment are eccentric motors, piezoelectric elements, linear actuators, or the like and therefore the resistance or the like thereof does not vary greatly. Accordingly, increases in the temperature (the amount of heat) of the vibrators 201 are in proportion to the product of the voltage (V) and the time.

A comparison between the vibration sources 1 to 3 in Figs. 13(a), 13(b), and 13(c) reveals that the limits of the voltage values of the vibration sources 1 to 3 are all Va. The time tm2 during which the voltage value is continuously zero is the same in the vibration sources 1 to 3. On the other hand, the time tm1 during which the voltage value Va is continuously outputted is longest in the vibration source 3, second longest in the vibration source 2, and shortest in the vibration source 3. Also, as described above, the amount of heat is in proportion to the product of the voltage and the time. Accordingly, the vibration source 3 causes the vibrators 201 to consume the largest amount of power per unit time; the vibration source 2 causes the vibrators 201 to consume the second largest amount of power per unit time; and the vibration source 1 causes the vibrators 201 to consume the smallest amount of power per unit time.

When the voltage output unit 80 acquires urgency information from the controller 10d, it selects a vibration source on the basis of the table information shown in Fig. 3(b) and reads the selected vibration source from the memory 20. Specifically, if the urgency information is "low," the voltage output unit 80 selects the vibration source 3 shown in Fig. 13(c) and reads the vibration source 3 from the memory 20; if the urgency information is "medium," the voltage output unit 80 selects the vibration source 2 shown in Fig. 13(b) and reads the vibration source 2 from the memory 20; and if the urgency information is "high," the voltage output unit 80 selects the vibration source 1 shown in Fig. 13(a) and reads the vibration source 1 from the memory 20.

Subsequently, the voltage output unit 80 outputs the voltage value Va (voltage signal) to the amplifier 50 for a predetermined time on the basis of the vibration source read from the memory 20 and also outputs a voltage value of 0 V (voltage signal) to the amplifier 50 for a predetermined time on the basis of the vibration source. The rotation states of the motors of the vibrators 201 are controlled on the basis of changes in the voltage of the voltage signal outputted from the voltage output unit 80. The controller 10d determines the level of overall urgency on the basis of information on the vehicle situation or the like and the timer time and controls the time during which the voltage value Va is continuously outputted, or the like in accordance with the determined level of urgency. Thus, the vibration generation apparatus 1d according to the fourth embodiment is able to suppress increases in the temperature of the vibrators 201 and to prevent a malfunction of the vibrators 201.

As described above, the vibration generation apparatus 1d according to the fourth embodiment includes the voltage output unit 80 in place of the signal selector 30 and signal generator 40 included in the vibration generation apparatus 1a according to the first embodiment, as well as includes the vibrators 201 that control generation of alarm vibrations in accordance with changes in the voltage of the voltage signal, such as eccentric motors, piezoelectric elements, linear actuators, or the like. However, the vibration generation apparatus that includes the voltage output unit 80 in place of the signal selector 30 and signal generator 40 and also includes the vibrators 201 that control generation of alarm vibrations in accordance with changes in the voltage of the voltage signal need not have the configuration shown in the fourth embodiment.

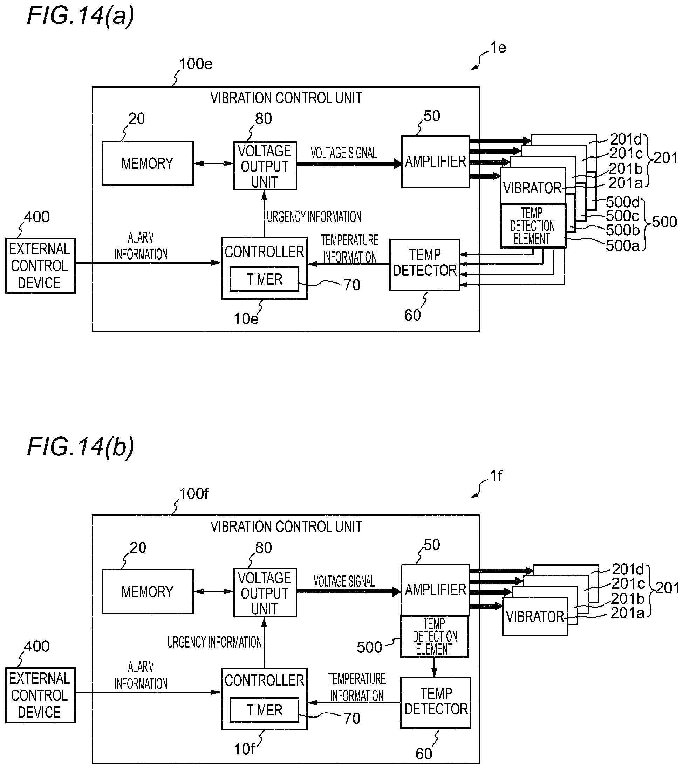

For example, a vibration generation apparatus 1e shown in Fig. 14(a) represents an example of a vibration generation apparatus that includes a voltage output unit 80 in place of the signal selector 30 and signal generator 40 included in the vibration generation apparatus 1b according to the second embodiment (see Fig. 8) and also includes vibrators 201 that control generation of alarm vibrations in accordance with changes in the voltage of the voltage signal. As with the vibration generation apparatus 1b according to the second embodiment, the vibration generation apparatus 1e shown in Fig. 14(a) is able to measure and detect the temperature state of the vibrators 201 in real time using temperature detection elements 500 and a temperature detector 60 and to reliably detect increases in the temperature of the vibrators 201.

Also, if the temperature T of the vibrators 201 is higher than a preset threshold (e.g., TC°C), a controller 10e of the vibration generation apparatus 1e shown in Fig. 14(a), as with that of the vibration generation apparatus 1b according to the second embodiment, modifies, to "high," the level of overall urgency determined on the basis of nearby distance information x, departure distance information y, and/or driver state information, and the timer time, whether the level of overall urgency is "low," "medium," or "high." Thus, the voltage output unit 80 selects the vibration source 1 that causes the vibrators 201 to consume the smallest amount of power per unit time and outputs a voltage signal on the basis of the vibration source 1, and the vibrators 201 output alarm vibrations. Since the alarm vibrations outputted from the vibrators 201 are vibrations based on the vibration source that causes the vibrators 201 to consume the smallest amount of power per unit time, the vibration generation apparatus 1e is able to suppress increases in the temperature of the vibrators 201 quickly and effectively and to prevent a malfunction of the vibrators 201 caused by temperature increases.

A vibration generation apparatus If shown in Fig. 14(b) represents an example of a vibration generation apparatus that includes a voltage output unit 80 in place of the signal selector 30 and signal generator 40 included in the vibration generation apparatus 1c according to the third embodiment (see Fig. 11) and also includes vibrators 201 that control generation of alarm vibrations in accordance with changes in the voltage of the voltage signal. In the vibration generation apparatus If shown in Fig. 14(b) also, as in the vibration generation apparatus 1c according to the third embodiment, a temperature detection element 500 that measures the temperature state of an amplifier 50 is disposed inside a vibration control unit 100f. That is, the single temperature detection element 500 only has to be disposed so as to be associated with the amplifier 50. Thus, the number of temperature detection elements 500 installed is reduced compared to the vibration generation apparatuses 1b and 1e that require the multiple temperature detection elements 500 corresponding to the multiple vibrators 200 or 201. Also, as in the vibration generation apparatus 1c according to the third embodiment, the burden of installing wiring from the temperature detection elements 500 to the temperature detector 60 is reduced.

Also, if the temperature value measured by the temperature detection element 500 is higher than the threshold, a controller 10f of the vibration generation apparatus If shown in Fig. 14(b), as with that of the vibration generation apparatus 1c according to the third embodiment, modifies, to "high," the level of overall urgency determined on the basis of nearby distance information x, departure distance information y, and/or driver state information, and the timer time, whether the level of overall urgency is "low," "medium," or "high." Since alarm vibrations generated by the vibrators 201 on the basis of the level of urgency, "high," are vibrations based on a vibration source that causes the vibrators 201 to consume the smallest amount of power per unit time, the vibration generation apparatus If is able to suppress increases in the temperature of the vibrators 201 quickly and effectively and to prevent a malfunction of the vibrators 201 caused by temperature increases.

While vibration generation apparatuses and vibration generation methods according to embodiments of the present invention have been described using the vibration generation apparatuses 1a, 1b, 1c, 1d, 1e, and 1f according to the first to fourth embodiments, the vibration generation apparatuses and vibration generation methods are not limited to these configurations. The vibration generation apparatuses and vibration generation methods are only required to determine the level of urgency determined on the basis of alarm information acquired from an external control device, considering the timer time. Also, the vibration generation apparatuses and vibration generation methods are not limited to a specific configuration as long as they are able to modify the level of urgency considering the temperature state of vibrators and to suppress increases in the temperature of the vibrators.

For example, while the vibrators 200 or 201 of the vibration generation apparatuses 1a to If according to the first to fourth embodiments have been described as being installed in the seat 300 as shown in Fig. 2, the vibrators 200 or 201 need not be installed in the seat 300. For example, the vibrators 200 or 201 may be installed in the steering wheel, arm rest, or the like as long as the vibrators 200 or 201 are able to make notifications to the driver using vibrations. While the vibration generation apparatuses 1a to If according to the first to fourth embodiments have been described as including the four vibrators 200 or 201, the number of vibrators 200 or 201 installed is not limited to four and may be one to three, or five or more.

Configurations whose vibrators 200 or 201 are installed in different positions or configurations that include a different number of vibrators 200 or 201 are also able to prevent a malfunction of the vibrators and avoid a functional failure caused by temperature increases by determining a vibration source considering increases in the temperature of the vibrators 200 or 201 and causing the vibrators to output alarm vibrations that cause the vibrators to consume a different amount of power per unit time, on the basis of the determined vibration source. Also, since increases in the temperature of the vibrators are suppressed and thus a malfunction of the vibrators is prevented, downsizing and cost reduction of the vibrators are facilitated.

### REFERENCE SIGNS LIST

1a, 1b, 1c, 1d, 1e, 1f vibration generation apparatus
10a, 10b, 10c, 10d, 10e, 10f controller (alarm information acquisition unit, vehicle situation urgency determination unit, time urgency determination unit, overall urgency determination unit)
20 memory
30 signal selector (alarm signal generator)
40 signal generator (alarm signal generator)
50 amplifier (signal amplifier)
60 temperature detector (first temperature detector, second temperature detector)
70 timer
80 voltage output unit
100a, 100b, 100c, 100d, 100e, 100f vibration control unit
200, 200a, 200b, 200c, 200d exciter (vibrator, vibration generator)
201, 201a, 201b, 201c, 201d vibrator (vibration generator)
300 seat
301 backrest
302 seating portion
400 external control device (alarm information output unit)
500, 500a, 500b, 500c, 500d temperature detection element (first temperature detector, second temperature detector)

## Claims

1. A vibration generation apparatus where urgency related to a vehicle situation, urgency related to time information, and overall urgency are set as urgency items and multiple levels are set on each of the urgency items, comprising
a vibration generator configured to generate a vibration to make a notification to a user;
an alarm information acquisition unit configured to acquire alarm information to be given to the user, from an alarm information output unit;
a vehicle situation urgency determination unit configured to determine the level of the urgency related to the vehicle situation on the basis of the alarm information acquired from the alarm information acquisition unit;
a time urgency determination unit configured to measure the time during which the alarm information acquisition unit is continuously acquiring the alarm information and to determine the level of the urgency related to the time information such that the level becomes higher as the measured time becomes longer;
an overall urgency determination unit configured to determine the highest level among the level of the urgency determined by the vehicle situation urgency determination unit and the level of the urgency determined by the time urgency determination unit as the level of the overall urgency; and
an alarm signal generator configured to generate an alarm signal for causing the vibration generator to generate the vibration, on the basis of the level of the urgency determined by the overall urgency determination unit and to output the alarm signal to the vibration generator, wherein
if the level of the urgency determined by the overall urgency determination unit is a relatively low level among the multiple levels, the alarm signal generator generates an alarm signal that causes the vibration generator to consume a greater amount of power per unit time when generating the vibration,
if the level of the urgency determined by the overall urgency determination unit is a relatively high level among the multiple levels, the alarm signal generator generates an alarm signal that causes the vibration generator to consume a smaller amount of power per unit time when generating the vibration, and
the vibration generator generates the vibration in accordance with a change in a signal level of the alarm signal generated by the alarm signal generator.

2. The vibration generation apparatus according to claim 1, comprising a first temperature detector configured to detect a temperature of the vibration generator, wherein
if the temperature detected by the first temperature detector exceeds a temperature at which the vibration generator may malfunction, the overall urgency determination unit determines the highest level among the multiple levels as the level of the overall urgency regardless of the level of the urgency determined by the vehicle situation urgency determination unit and the level of the urgency determined by the time urgency determination unit.

3. The vibration generation apparatus according to claim 1, comprising:
a signal amplifier configured to amplify the alarm signal generated by the alarm signal generator and to output the amplified alarm signal to the vibration generator; and
a second temperature detector configured to detect a temperature of the signal amplifier, wherein
if it is determined that the vibration generator may malfunction, on the basis of the temperature detected by the second temperature detector, the overall urgency determination unit determines the highest level among the multiple levels as the level of the overall urgency regardless of the level of the urgency determined by the vehicle situation urgency determination unit and the level of the urgency determined by the time urgency determination unit.

4. The vibration generation apparatus according to claim 1, wherein the alarm signal that causes the vibration generator to consume the greater amount of power per unit time when generating the vibration has a greater maximum amplitude than the alarm signal that causes the vibration generator to consume the smaller amount of power per unit time.

5. The vibration generation apparatus according to claim 1, wherein the alarm signal that causes the vibration generator to consume the greater amount of power per unit time when generating the vibration has a lower frequency range than the alarm signal that causes the vibration generator to consume the smaller amount of power per unit time.

6. The vibration generation apparatus according to claim 1, wherein a vibration generation time per unit time of the vibration generated by the vibration generator on the basis of the alarm signal that causes the vibration generator to consume the greater amount of power per unit time is longer than a vibration generation time per unit time of the vibration generated by the vibration generator on the basis of the alarm signal that causes the vibration generator to consume the smaller amount of power per unit time.

7. The vibration generation apparatus according to claim 1, wherein
if the level of the urgency determined by the overall urgency determination unit is a relatively low level among the multiple levels, the alarm signal generator generates a voltage signal whose voltage value has been changed so that the vibration generator consumes a greater amount of power per unit time when generating the vibration, and outputs the voltage signal to the vibration generator,
if the level of the urgency determined by the overall urgency determination unit is a relatively high level among the multiple levels, the alarm signal generator generates a voltage signal whose voltage value has been changed so that the vibration generator consumes a smaller amount of power per unit time when generating the vibration, and outputs the voltage signal to the vibration generator, and
the vibration generator generates the vibration by driving a motor in accordance with the change in the voltage of the voltage signal acquired from the alarm signal generator.

8. A vibration generation method performed by a vibration generation apparatus where urgency related to a vehicle situation, urgency related to time information, and overall urgency are set as urgency items and multiple levels are set on each of the urgency items and that generates a vibration to make a notification to a user, comprising:
an alarm information acquisition step of acquiring, by an alarm information acquisition unit, alarm information to be given to the user, from an alarm information output unit;
a vehicle situation urgency determination step of determining, by a vehicle situation urgency determination unit, the level of the urgency related to the vehicle situation on the basis of the alarm information acquired in the alarm information acquisition step;
a time urgency determination step of measuring the time during which the alarm information acquisition unit is continuously acquiring the alarm information and determining, by a time urgency determination unit, the level of the urgency related to the time information such that the level becomes higher as the measured time becomes longer;
an overall urgency determination step of determining, by an overall urgency determination unit, the highest level among the level of the urgency determined in the vehicle situation urgency determination step and the level of the urgency determined in the time urgency determination step as the level of the overall urgency;
an alarm signal generation step of generating, by an alarm signal generator, an alarm signal for generating the vibration, on the basis of the level of the urgency determined in the overall urgency determination step; and
a vibration generation step of generating, by a vibration generator, the vibration in accordance with a change in a signal level of the alarm signal generated in the alarm signal generation step, wherein
if the level of the urgency determined in the overall urgency determination step is a relatively low level among the multiple levels, the alarm signal generator, in the alarm signal generation step, generates an alarm signal that causes the vibration generator to consume a greater amount of power per unit time when generating the vibration, and
if the level of the urgency determined in the overall urgency determination step is a relatively high level among the multiple levels, the alarm signal generator, in the alarm signal generation step, generates an alarm signal that causes the vibration generator to consume a smaller amount of power per unit time when generating the vibration.

9. The vibration generation method according to claim 8, comprising a first temperature detection step of detecting, by a first temperature detector, a temperature of the vibration generator, wherein
if the temperature detected in the first temperature detection step exceeds a temperature at which the vibration generator may malfunction, the overall urgency determination unit, in the overall urgency determination step, determines the highest level among the multiple levels as the level of the overall urgency regardless of the level of the urgency determined in the vehicle situation urgency determination step and the level of the urgency determined in the time urgency determination step.

10. The vibration generation method according to claim 8, comprising:
a signal amplification step of amplifying, by a signal amplifier, the alarm signal generated in the alarm signal generation step and outputting the amplified alarm signal to the vibration generator; and
a second temperature detection step of detecting, by a second temperature detector, a temperature of the signal amplifier, wherein
if it is determined that the vibration generator may malfunction, on the basis of the temperature detected in the second temperature detection step, the overall urgency determination unit, in the overall urgency determination step, determines the highest level among the multiple levels as the level of the overall urgency regardless of the level of the urgency determined in the vehicle situation urgency determination step and the level of the urgency determined in the time urgency determination step.

11. The vibration generation method according to claim 8, wherein the alarm signal that causes the vibration generator to consume the greater amount of power per unit time when generating the vibration has a greater maximum amplitude than the alarm signal that causes the vibration generator to consume the smaller amount of power per unit time.

12. The vibration generation method according to claim 8, wherein the alarm signal that causes the vibration generator to consume the greater amount of power per unit time when generating the vibration has a lower frequency range than the alarm signal that causes the vibration generator to consume the smaller amount of power per unit time.

13. The vibration generation method according to claim 8, wherein in the vibration generation step, a vibration generation time per unit time of the vibration generated by the vibration generator on the basis of the alarm signal that causes the vibration generator to consume the greater amount of power per unit time is longer than a vibration generation time per unit time of the vibration generated by the vibration generator on the basis of the alarm signal that causes the vibration generator to consume the smaller amount of power per unit time.

14. The vibration generation method according to claim 8, wherein
if the level of the urgency determined in the overall urgency determination step is a relatively low level among the multiple levels, the alarm signal generator, in the alarm signal generation step, generates a voltage signal whose voltage value has been changed so that the vibration generator consumes a greater amount of power per unit time when generating the vibration in the vibration generation step, and outputs the voltage signal to the vibration generator,
if the level of the urgency determined in the overall urgency determination step is a relatively high level among the multiple levels, the alarm signal generator, in the alarm signal generation step, generates a voltage signal whose voltage value has been changed so that the vibration generator consumes a smaller amount of power per unit time when generating the vibration in the vibration generation step, and outputs the voltage signal to the vibration generator, and
in the vibration generation step, the vibration generator generates the vibration by driving a motor in accordance with the change in the voltage of the voltage signal acquired from the alarm signal generator.
